(19) Europäisches Patentamt
European Patent Office
Office européen des brevets

(11) EP 2 065 418 A1

(12) EUROPEAN PATENT APPLICATION
published in accordance with Art. 153(4) EPC

(43) Date of publication:
**03.06.2009 Bulletin 2009/23**

(21) Application number: **07806537.2**

(22) Date of filing: **31.08.2007**

(51) Int Cl.:
***C08G 18/83*** *(2006.01)* ***C08G 73/14*** *(2006.01)*

(86) International application number:
**PCT/JP2007/067064**

(87) International publication number:
**WO 2008/035561 (27.03.2008 Gazette 2008/13)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **19.09.2006 JP 2006253388**

(71) Applicants:
- **Nitta Corporation**
  **Osaka-shi,**
  **Osaka 556-0022 (JP)**
- **Inoue, Shinichi**
  **Tokoname-shi 479-0834 (JP)**

(72) Inventors:
- **INOUE, Shinichi**
  **Tokoname-shi**
  **Aichi 479-0834 (JP)**
- **NISHIO, Tomohiro**
  **Yamatokohriyama-shi**
  **Nara 639-1085 (JP)**
- **INOUE, Kiyotaka**
  **Yamatokohriyama-shi**
  **Nara 639-1085 (JP)**
- **KASAZAKI, Toshiaki**
  **Yamatokohriyama-shi**
  **Nara 639-1085 (JP)**
- **SAKAGUCHI, Yugo**
  **Yamatokohriyama-shi**
  **Nara 639-1085 (JP)**
- **SHIBATA, Jiro**
  **Yamatokohriyama-shi**
  **Nara 639-1085 (JP)**
- **ANDO, Takashi**
  **Yamatokohriyama-shi**
  **Nara 639-1085 (JP)**

(74) Representative: **Ackroyd, Robert**
**W.P. Thompson & Co.**
**Eastcheap House**
**Central Approach**
**Letchworth**
**Hertfordshire SG6 3DS (GB)**

# (54) IMIDE-MODIFIED ELASTOMER

(57) An imide-modified elastomer represented by the following general formula (I):

[Chemical formula 11]

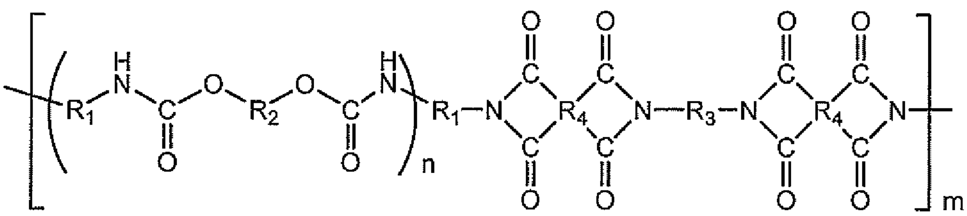

(I)

wherein, $R_1$ represents a divalent organic group having an aromatic ring or an aliphatic ring; $R_2$ represents a divalent organic group having a weight average molecular weight of 100 to 10,000; $R_3$ represents a divalent organic group having an aromatic ring, an aliphatic ring or an aliphatic chain; $R_4$ represents a tetravalent organic group having 4 or more

EP 2 065 418 A1

carbon atoms; n represents an integer of 1 to 100; and m represents an integer of 2 to 100. The imide-modified elastomer is a rubber shaped material having a pliable elastic modulus and also has high strength and high thermal resistance.

Disclosed is an imide-modified elastomer represented by the following general formula (I). [chemical formula 1] (In the formula, $R_1$ represents a divalent organic group having an aromatic ring or an aliphatic ring; $R_2$ represents a divalent organic group having a weight average molecular weight of 100-10,000; $R_3$ represents a divalent organic group having an aromatic ring, an aliphatic ring or an aliphatic chain; $R_4$ represents a tetravalent organic group containing 4 or more carbon atoms; n represents an integer of 1-100; and m represents an integer of 2-100.) This imide-modified elastomer is a rubber-like material with flexible elastic modulus, which has high strength and high heat resistance.

## Description

TECHNICAL FIELD

The present invention relates to an imide-modified elastomer that is a rubber-like material having a pliable elastic modulus and also has high strength and high thermal resistance.

BACKGROUND ART

Elastomers are required, depending on their purposes, to be rubber-like material having a pliable elastic modulus and have various physical properties such as high strength and high thermal resistance. However, fluorine-containing rubbers and silicone rubbers, each having high thermal resistance among conventional rubber materials, have thermosetting property, so that the recycling property thereof is low and the molding process cost thereof is high. Thermoplastic rubbers have excellent recycling property and molding process cost, however, have poor thermal resistance.

On the other hand, examples of elastomers having excellent thermal resistance include imide-modified elastomers. For example, Patent Document 1 describes a polyimide elastomer compound (an imide-modified elastomer) having high elasticity and a wide temperature range of rubber-like elastic region. In Patent Document 1, the imide-modified elastomer is obtained by allowing a high molecular weight polyurea compound, which is obtained by the reaction between diamine and isocyanate, to react with cyclic carboxylic dianhydride. Other imide-modified elastomers obtained by introducing imide bond into polyurethane are also described in Non- Patent Document 1 and Non-Patent Document 2. In these documents, thermal resistance is improved while maintaining the physical properties of polyurethane by introducing imide bond into polyurethane having poor thermal resistance.

However, any of the imide-modified elastomers described in these three documents fails to satisfy the above-mentioned physical properties, namely, the rubber-like material having a pliable elastic modulus, as well as high strength and high thermal resistance. Specifically, Patent Document 1 uses the diamine compound whose molecular weight is around several thousands, making it difficult to obtain a pliable elastomer. In Non-Patent Document 1, the prepolymer of polyimide is previously synthesized and copolymerized with urethane prepolymer. This produces a random number of imide units consisting of tetracarboxylic dianhydride formed between imide urethane prepolymer and urethane prepolymer, and isocyanate or diamine. These imide units aggregate non-uniformly. Therefore, even when the amount of an elastomer component is increased to form a pliable rubber-like material, neither sufficient strength nor sufficient thermal resistance can be obtained. In Non-Patent Document 2, urethane prepolymer is subjected to chain extension with tetracarboxylic dianhydride, resulting in a single imide unit. Therefore, even when the amount of an elastomer component is increased to form a pliable rubber-like material, neither sufficient strength nor sufficient thermal resistance can be obtained.
Hence, there is a need for development of a more excellent imide-modified elastomer.

Patent Document 1: Japanese Unexamined Patent Publication No. 11-106507
Non-Patent Document 1: "Synthesis of Polyimide Urethane Elastomer and Physical Properties Thereof," Elastomer Discussion Summary by Hideyuki Tezeni, Tetsuo Shiiba and Mutsuhisa Furukawa, 1999, pp72-75
Non-Patent Document 2: "Synthesis of Polyimide Urethane Elastomer and Physical Properties Thereof" written by Shoko Matsuo, Eisuke Yamada and Shinji Inagaki, Annual Meeting of Union of Chemistry-Related Societies in Chubu Area, Abstract collection, 1995, p381

DISCLOSURE OF THE INVENTION

PROBLEMS TO BE SOLVED BY THE INVENTION

It is desirable to provide a new imide-modified elastomer that is a rubber shaped material having a pliable elastic modulus and also has high strength and high thermal resistance.

MEANS FOR SOLVING THE PROBLEMS

There is provided an imide-modified elastomer represented by the following general formula (I):

[Chemical formula 1]

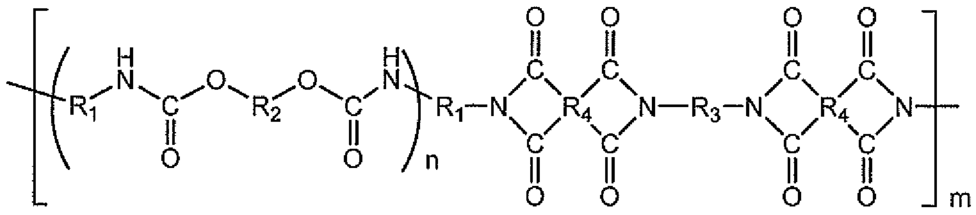

(I)

wherein, $R_1$ represents a divalent organic group having an aromatic ring or an aliphatic ring; $R_2$ represents a divalent organic group having a weight average molecular weight of 100 to 10,000; $R_3$ represents a divalent organic group having an aromatic ring, an aliphatic ring or an aliphatic chain; $R_4$ represents a tetravalent organic group having 4 or more carbon atoms; n represents an integer of 1 to 100; and m represents an integer of 2 to 100. This imide-modified elastomer is a new compound described nowhere.

EFFECT OF THE INVENTION

The imide-modified elastomer represented by the general formula (I) contains polyurethane as an elastomer component. This enables to produce a rubber-like material having a pliable elastic modulus, and also enables two imide units continuous with a main chain to be introduced at a desired ratio (an imide fraction), while controlling the distribution thereof. The imide-modified elastomer therefore has high strength and high thermal resistance. Additionally, those represented by the general formula (I) have thermoplasticity and hence have excellent recycling property and molding property, as well as excellent solvent resistance.

BRIEF DESCRIPTION OF THE DRAWINGS

Fig. 1 shows the IR spectrum of an imide-modified elastomer (1) obtained in Synthesis Example 1;
Fig. 2 shows the IR spectrum of an imide-modified elastomer (2) obtained in Synthesis Example 2;
Fig. 3 shows the IR spectrum of an imide-modified elastomer (3) obtained in Synthesis Example 3;
Fig. 4 is a graph showing the tensile test results of Example 1;
Fig. 5 is a graph showing the dynamic viscoelasticity test results of Example 1;
Fig. 6 is a graph showing the thermal analysis test results of Example 1;
Fig. 7 is a graph showing the dynamic viscoelasticity test results of Comparative Example 2;
Fig. 8 is a graph showing the tensile test results of Example 2;
Fig. 9 is a graph showing the dynamic viscoelasticity test results of Example 2;
Fig. 10 is a graph showing the tensile test results of Example 3;
Fig. 11 is a graph showing the dynamic viscoelasticity test results of Example 3;
Fig. 12 is a graph showing the tearing test results of Example 4;
Fig. 13 is a graph showing the thermal aging test results of Example 4;
Fig. 14 is a graph showing the solvent resistance test results (toluene) of Example 4;
Fig. 15 is a graph showing the solvent resistance test results (tetrahydrofuran) of Example 4; and
Fig. 16 is a graph showing the solvent resistance test results (toluene) of Example 5.

PREFERRED EMBODIMENTS FOR CARRYING OUT THE INVENTION

The imide-modified elastomer of the invention is represented by the above general formula (I). In this formula, the above-mentioned $R_1$ represents a divalent organic group having an aromatic ring or an aliphatic ring. Examples of the organic group include residues except for an isocyanate group (-NCO) in diisocyanate (a) capable of forming urethane prepolymer (c) together with polyol (b) according to a reaction formula (A) described later.

The above-mentioned $R_2$ represents a divalent organic group having a weight average molecular weight of 100 to 10,000, preferably 300 to 5,000. Examples of the organic group include residues except for two hydroxyl groups (-OH) in polyol (b) capable of forming urethane prepolymer (c) together with diisocyanate (a) according to the reaction formula (A).

The above-mentioned $R_3$ represents a divalent organic group having an aromatic ring, an aliphatic ring or an

aliphatic chain. Examples of the organic group include residues except for an amino group ($-NH_2$) in at least one diamine compound (d) selected from aromatic diamine compounds having a carbon number of 6 to 27, aliphatic diamine compounds having a carbon number of 6 to 24 and alicyclic diamine compounds having a carbon number of 6 to 24, each of which can chain extend urethane prepolymer (c) by urea bond according to a reaction formula (B) described later. Examples of the aliphatic chain include those having a carbon number of 1.

The above-mentioned $R_4$ represents a tetravalent organic group having 4 or more carbon atoms. Examples of the organic group include residues of at least one tetracarboxylic dianhydride (f) selected from aromatic tetracarboxylic dianhydrides having a carbon number of 6 to 18 and alicyclic tetracarboxylic dianhydrides having a carbon number of 4 to 6, each of which can introduce an imide unit into an urea bond site according to a reaction formula (C) described later. The above-mentioned n represents an integer of 1 to 100, preferably an integer of 2 to 50. The above-mentioned m represents an integer of 2 to 100, preferably an integer of 2 to 50.

Specific examples of the imide-modified elastomer represented by the general formula (I) (hereinafter also referred to as an "imide-modified elastomer (I)") include imide-modified elastomers represented by the following formula (1):

[Chemical formula 2]

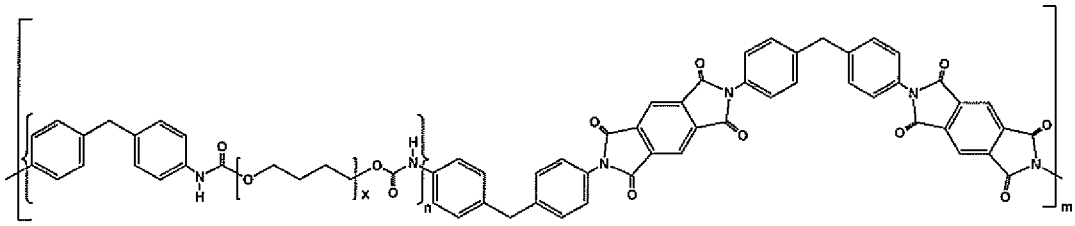

(1)

wherein, n represents an integer of 1 to 100; m represents an integer of 2 to 100; and x represents an integer of 10 to 100.

Preferably, the imide-modified elastomer (I) is a block copolymer in which urethane prepolymer having an isocyanate group at both ends of each molecule obtained from diisocyanate and polyol is chain extended with a diamine compound by urea bond, and an imide unit is introduced into the urea bond site with tetracarboxylic dianhydride. This imide-modified elastomer (I) can be manufactured through, for example, the following reaction formulas (A) to (C).

<Reaction Formula (A)>

[Chemical formula 3]

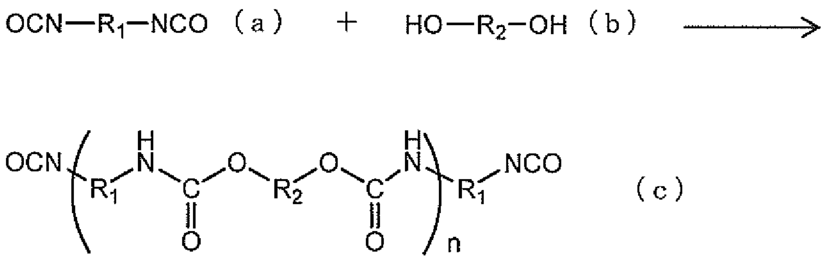

wherein, $R_1$, $R_2$ and n are the same as above.

<Synthesis of Urethane Prepolymer (c)>

As shown in the reaction formula (A), firstly, urethane prepolymer (c) having an isocyanate group at both ends

of the molecule thereof is obtained from diisocyanate (a) and polyol (b). Since the imide-modified elastomer (I) of the invention employs the urethane prepolymer (c) as an elastomer component, the elastic modulus in the rubber-like region (around room temperature) is lowered to impart more elastic properties, and by controlling the molecular weight of the urethane prepolymer (c), two successive imide units can be introduced into the main chain at a desired ratio while controlling the distribution thereof.

Examples of the diisocyanate (a) include 2,4-tolylenediisocyanate (TDI), 2,6-tolylenediisocyanate (TDI), 4,4'-diphenylmethanediisocyanate (MDI), polymeric MDI (Cr. MDI), dianisidine diisocyanate (DADL), diphenylether diisocyanate (PEDI), pitolylene diisocyanate (TODI), naphthalene diisocyanate (NDI), hexamethylene diisocyanate (HMDI), isophorone diisocyanate (IPDI), lysine diisocyanate methyl ester (LDI), methaxylene diisocyanate (MXDI), 2,2,4-trimethylhexamethylene diisocyanate (TMDI), 2,4,4- trimethylhexamethylene diisocyanate (TMDI), dimer acid diisocyanate (DDI), isopropylidenebis (4-cyclohexyl isocyanate) (IPCI), cyclohexylmethane diisocyanate (hydrogenated MDI), methylcyclohexane diisocyanate (hydrogenated TDI) and TDI dimer (TT). These may be used either singly or as a mixture of two or more selected therefrom. Preferably, these are subjected to vacuum distillation.

Examples of the polyol (b) include polyether polyols such as polypropylene glycol (PPG), poly(oxytetramethylene)glycol (PTMG) and polymer polyol; polyester polyols such as adipate based polyol (condensed polyester polyol) and polycaprolactone based polyol; polycarbonate polyol; polybutadiene polyol; and acryl polyol. These may be used either singly or as a mixture of two or more selected therefrom.

When the polyol (b) is at least one kind selected from polycarbonate polyol and polyester polyol, the imide-modified elastomer (I) having particularly excellent thermal resistance can be obtained. That is, by using the polyol (b) thus selected, the main chain can contain at least one of a polycarbonate structure unit and a polyester structure unit. Consequently, the thermal resistance owing to the polycarbonate structure unit or the polyester structure unit is added to the thermal resistance owing to the two successive imide units. This improves the thermal resistance of the imide-modified elastomer (I).

Examples of the polycarbonate polyol include polycarbonate polyols obtained by condensation polymerization between polyol (polyhydric alcohol) and phosgene, chloroformate, dialkyl carbonate, dialyl carbonate, alkylene carbonate or the like. Examples of the polyol include 1,6-hexanediol, 1,4-butanediol, 1,3-butanediol, neopentyl glycol and 1,5-pentanediol. Examples of the dialky lcarbonate include dimethylcarbonate and diethylcarbonate. Specific examples of polycarbonate polyol include polycarbonate diols such as polytetramethylene carbonate diol and polyhexamethylene carbonate diol. These may be used either singly or as a mixture of two or more selected therefrom.

Examples of the polyester polyol include polyester polyol obtained by condensation polymerization between poly(carboxylic acid) and polyol. Specific examples thereof include polyethylene adipate, polydiethylene adipate, polypropylene adipate, polytetramethylene adipate, polyhexamethylene adipate, polyneopentylene adipate, polyol composed of 3-methyl-1,5-pentanediol and adipic acid, polycaprolactonepolyol obtained by subjecting ε-caprolactone to ring-opening polymerization, polycaprolactone diol, and polyol obtained by subjecting β-methyl-δ-valerolactone to ring-opening with ethylene glycol. These may be used either singly or as a mixture of two or more selected therefrom.

Examples of the polyester polyol include copolymers consisting of at least one kind of acid selected from terephthalic acid, isophthalic acid, phthalic anhydride, succinic acid, adipic acid, azelaic acid, sebacic acid, dodecanedioic acid, dimeric acid (mixture), paraoxy benzoic acid, trimellitic anhydride, ε-caprolactone, β-methyl-δ-valerolactone, and at least one kind of glycol selected from ethylene glycol, propylene glycol, 1,4-butanediol, 1,5-pentanediol, 1,6-hexane diol, neopenthyl glycol, polyethylene glycol, polytetramethylene glycol, 1,4-cyclohexane dimethanol, pentaerythritol and 3-methyl-1,5-pentane diol.

It is preferable to use the polyol (b) after being subjected to vacuum drying under the conditions of 70°C to 90°C, 1 to 5 mmHg and about 10 to 30 hours. The weight average molecular weight of the polyol (b) is 100 to 10,000, preferably 300 to 5,000. These weight average molecular weights are obtained by measuring the polyol (b) through gel permeation chromatography (GPC), and expressing the obtained measured value in terms of polystyrene.

The above-mentioned diisocyanate (a) and the polyol (b) are mixed in a predetermined ratio, and the mixture is then allowed to react at room temperature for about 1 to 5 hours under an inert gas atmosphere such as argon gas. The mixing ratio (mol) between the diisocyanate (a) and the polyol (b), namely (a):(b), is preferably in the range of 1.01: 1 to 2:1. This enables the weight average molecular weight of the obtained urethane prepolymer (c) to be set at a predetermined value described later.

That is, the weight average molecular weight of the obtained urethane prepolymer (c) is 300 to 50,000, preferably 500 to 45,000. When the imide unit is introduced at a desired ratio while controlling the weight average molecular weight of the urethane prepolymer (c) within the above-mentioned range, it is capable of obtaining the imide-modified elastomer (I) that is a pliable rubber-like material having an elastic module and has high strength and high thermal resistance.

More specifically, when the weight average molecular weight of the urethane prepolymer (c) is set at the above-mentioned predetermined range, the imide fraction (the content of imide composition) of the imide-modified elastomer (I) can be set at 5 to 45% by weight, preferably 5 to 40% by weight. The imide fraction indicates the ratio of the imide composition in the imide-modified elastomer. When the imide fraction is within the above-mentioned predetermined

range, the distribution and the ratio of two successive imide units introduced into the main chain can be optimized to bring the imide-modified elastomer (I) into the pliable rubber-like material having an elastic module and impart high strength and high thermal resistance thereto. In contrast, when the imide fraction is lower than 5% by weight, the strength and the thermal resistance might be lowered. When it exceeds 45% by weight, the pliability might be lowered. The above-mentioned imide fraction is a value calculated from the charge amounts of the raw materials thereof, namely, the diisocyanate (a), the polyol (b), a later-described diamine compound (d) and the tetracarboxylic dianhydride (f), more specifically, a value calculated from the following equation (α).

[Equation 1]

$$\text{Imide fraction (\%)} = [(W_{a'}+W_c+W_d)/W_{total}]\times 100 \cdots (\alpha)$$

wherein, $W_{total}$ denotes $W_a+W_b+W_c+W_d$;
$W_a$ denotes diisocyanate charge amount (mol) × diisocyanate formula weight;
$W_b$ denotes polyol charge amount (mol) × polyol formula weight;
$W_c$ denotes diamine compound charge amount (mol) × diamine compound formula weight;
$W_d$ denotes tetracarboxylic dianhydride charge amount (mol) × tetracarboxylic dianhydride formula weight; and
$W_{a'}$ denotes [diisocyanate charge amount (mol) - polyol charge amount (mol)] × diisocyanate formula weight

A harder imide-modified elastomer (I) can be obtained as the urethane prepolymer (c) has a smaller weight average molecular weight in the above-mentioned range. In contrast, when the molecular weight thereof is smaller than 300, the imide-modified elastomer (I) becomes too hard and the pliability might be lowered. When it is over 50,000, the imide-modified elastomer (I) becomes too soft, the strength and thermal resistance thereof might be lowered. These weight average molecular weights are obtained by measuring the urethane prepolymer (c) through GPC, and expressing the obtained measured value in terms of polystyrene.

<Reaction Formula (B)>

[Chemical formula 4]

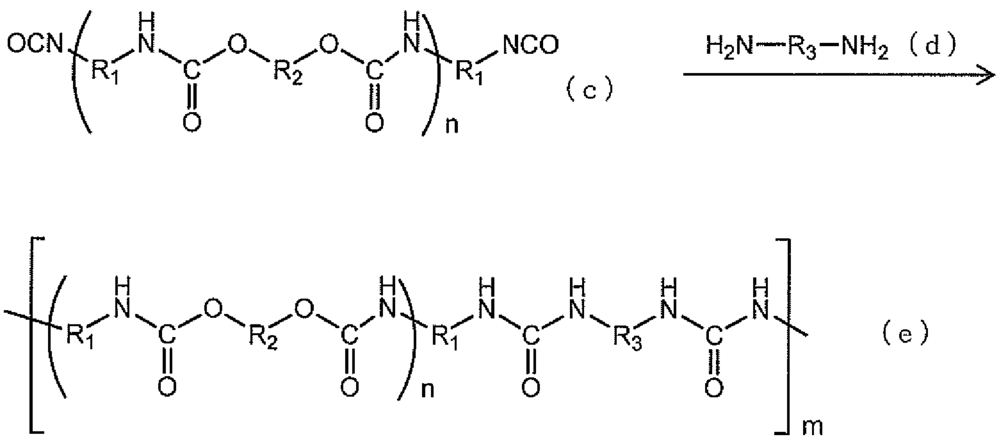


wherein, $R_1$ to $R_3$, n and m are the same as above.

<Synthesis of Polyurethane-Urea Compound (e)>

According to the reaction formula (B), a polyurethane-urea compound (e) as an imide precursor is synthesized using the urethane prepolymer (c) obtained above. That is, the polyurethane-urea compound (e) is obtained by subjecting the urethane prepolymer (c) to chain extension by urea bond using the diamine compound (d).

Examples of the diamine compound (d) include aromatic diamine compounds having a carbon number of 6 to 27 such as 1,4-diaminobenzene (also known as p-phenylenediamine, abbreviated as PPD), 1, 3-diaminobenzene (known

as m-phenylenediamine, abbreviated as MPD), 2,4-diaminotoluene (known as 2,4-toluenediamine, abbreviated as 2,4-TDA), 4,4'-diaminodiphenylmethane (known as 4,4'-methylenedianiline, abbreviated as MDA), 4,4'-diaminodiphenylether (known as 4,4'-oxydianiline, abbreviated as ODA, DPE), 3,4'-diaminodiphenylether (known as 3,4'-oxydianiline, abbreviated as 3,4'-DPE), 3,3'-dimethyl-4,4'-diaminobiphenyl (known as o-tridine, abbreviated as TB), 2,2'-dimethyl-4,4'-diaminobiphenyl (known as m-tridine, abbreviated as m-TB), 2,2'-bis(trifluoromethyl)-4,4'-diaminobiphenyl (abbreviated as TFMB), 3,7-diamino-dimethyldibenzothiophen-5,5-dioxide (known as o-tridine sulfone, abbreviated as TSN), 4,4'-diaminobenzophenone, 3,3'-diaminobenzophenone, 4,4'-bis(4-aminophenyl) sulfide (known as 4,4'- thiodianiline, abbreviated as ASD), 4,4'-diaminodiphenyl sulfone (known as 4,4'-sulfonyldianiline, abbreviated as ASN), 4, 4'-diaminobenzanilide (abbreviated as DABA), 1,n-bis(4-aminophenoxy)alkane (n=3, 4 or 5, abbreviated as DAnMG), 1,3-bis (4-aminophenoxy)-2,2-dimethylpropane (abbreviated as DANPG), 1,2-bis[2-(4-aminophenoxy)ethoxy] ethane (abbreviated as DA3EG), 9,9-bis(4-aminophenyl)fluorene (abbreviated as FDA), 5(6)-amino-1-(4-aminomethyl)-1,3,3-trimethylindan, 1,4-bis(4-aminophenoxy)benzene (abbreviated as TPE-Q), 1,3-bis(4-aminophenoxy)benzene (known as resorcin oxydianiline, abbreviated as TPE-R), 1,3-bis(3-aminophenoxy)benzene (abbreviated as APB), 4,4'-bis(4-aminophenoxy) biphenyl (abbreviated as BAPB), 4,4'-bis(3-aminophenoxy)biphenyl, 2,2-bis(4-aminophenoxyphenyl)propane (abbreviated as BAPP), bis[4-(4-aminophenoxy)phenyl] sulfone (abbreviated as BAPS), bis[4-(3-aminophenoxy)phenyl] sulfone (abbreviated as BAPS-M), 2,2-bis[4-(4-aminophenoxy)phenyl]hexafluoropropane (abbreviated as HFBAPP), 3,3'-dicarboxy-4,4'-diaminodiphenylmethane (abbreviated as MBAA), 4,6-dihydroxy-1,3-phenylenediamine (known as 4,6-diaminoresorein), 3,3'-dihydroxy-4,4'-diaminobiphenyl (known as 3,3'-dihydroxybendizine, abbreviated as HAB) and 3,3',4,4'-tetraaminobiphenyl (known as 3,3'-diaminobendizine, abbreviated as TAB); aliphatic or alicyclic diamine compounds having a carbon number of 6 to 24 such as 1,6-hexamethylenediamine (HMDA), 1,8-octamethylenediamine (OMDA), 1,9-nonamethylene diamine, 1,12-dodecamethylene diamine (DMDA), 1-amino-3-aminomethyl-3,5,5-trimethylcyclohexane (known as isophorondiamine), 4,4'-dicyclohexylmethanediamine and cyclohexanediamine; and silicone based diamine compounds such as 1,3-bis(3-aminopropyl)-1,1,3,3-tetramethyldisiloxane. These may be used either singly or as a mixture of two or more selected therefrom.

Especially, the use of 1,6-hexamethylenediamine (HMDA) provides the imide-modified elastomer (I) having excellent strength. The use of 1,4-bis(4-aminophenoxy)benzene (TPE-Q) or 1,3-bis(4-aminophonoxy)benzene (TPE-R) provides the imide-modified elastomer (I) having excellent solvent resistance.

The urethane prepolymer (c) and the above-mentioned diamine compound (d) are mixed equimolecularly, preferably in an $NCO/NH_2$ ratio of approximately 1.0, and the mixture is then subjected to solution polymerization reaction or bulk polymerization reaction in an inert gas atmosphere such as argon gas, at room temperature to 100°C, preferably 50°C to 100°C, for about 2 to 30 hours.

Examples of solvents usable for the solution polymerization reaction include N,N-dimethylacetoamide, N-methyl-2-pyrrolidone (NMP), N-hexyl-2-pyrrolidone and 1,3-dimethyl-2-imidazolidone. Particularly preferred are N,N-dimethylacetoamide, N-methyl-2-pyrrolidone (NMP), N-hexyl-2-pyrrolidone and 1,3-dimethyl-2-imidazolidone. These solvents may be used either singly or as a mixture of two or more selected therefrom. It is preferable to use those after being subjected to dehydration process according to the usual method.

<Reaction Formula (c)>

[Chemical formula 5]

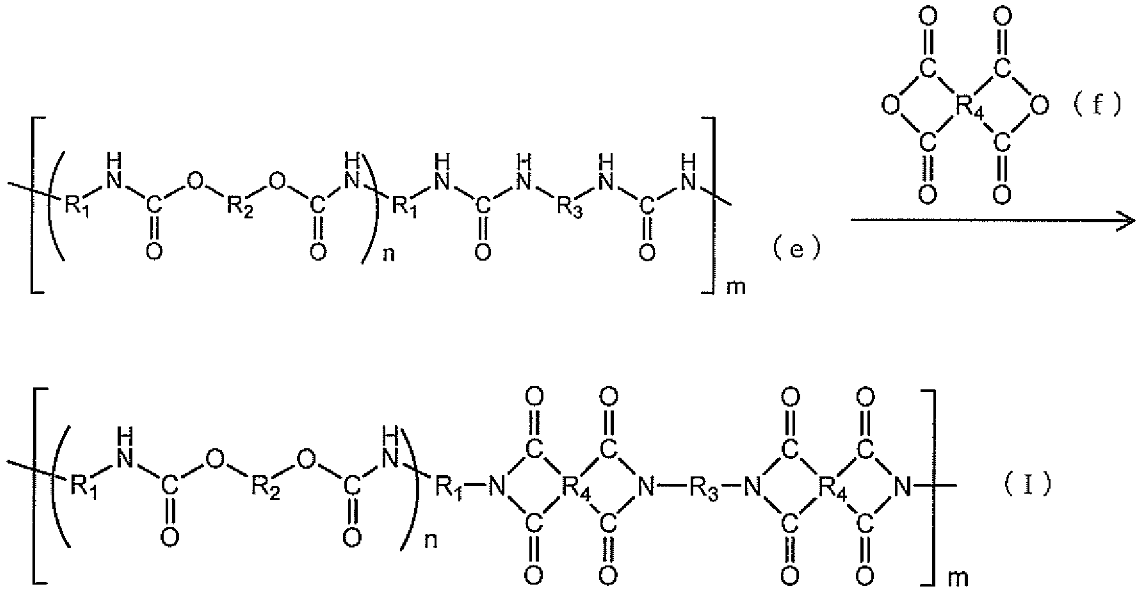
(e) (f) (I)

wherein, $R_1$ to $R_4$, n and m are the same as above.

<Synthesis of Imide-Modified Elastomer (I)>

According to a reaction formula (C), an imide-modified elastomer (I) is synthesized using the polyurethane-urea compound (e) obtained above. That is, the imide-modified elastomer (I) as a block copolymer is obtained by introducing an imide unit into a urea bond site using tetracarboxylic dianhydride (f).

Examples of the tetracarboxylic dianhydride (f) include aromatic tetracarboxylic dianhydrides having a carbon number of 6 to 18 such as pyromellitic dianhydride (PMDA), oxydiphthalic dianhydride (ODPA), biphenyl-3,4,3',4'-tetracarboxylic dianhydride (BPDA), benzophenone-3,4,3',4'-tetracarboxylic dianhydride (BTDA), diphenylsulfone-3,4,3',4'-tetracarboxylic dianhydride (DSDA), 4,4'-(2,2-hexafluoroisopropylidene)bis(phthalic anhydride) (6FDA) and m(p)-terphenyl-3,4,3',4'-tetracarboxylic dianhydride; and alicyclic tetracarboxylic dianhydrides having a carbon number of 4 to 6 such as cyclobutane-1,2,3,4-tetracarboxylic dianhydride and 1-carboxymethyl-2,3,5-cyclopentanetricarboxylic-2,6:3,5-dianhydride. These may be used either singly or as a mixture of two or more selected therefrom.

An imidization reaction between the polyurethane-urea compound (e) and the tetracarboxylic dianhydride (f) is carried out. The imidization reaction may be carried out in the presence or absence of a solvent. When the imidization reaction is carried out in the presence of a solvent, firstly, the polyurethane-urea compound (e) and the above-mentioned tetracarboxylic dianhydride (f) are added in a predetermined ratio into the solvent. The mixture is then allowed to react in an inert gas atmosphere such as argon gas, at 100°C to 300°C, preferably 135°C to 200°C, more preferably 150°C to 170°C, for about 1 to 10 hours, thereby obtaining a solution containing polyurethane amic acid (PUA) (a PUA solution) represented by the following formula (g).

[Chemical formula 6]

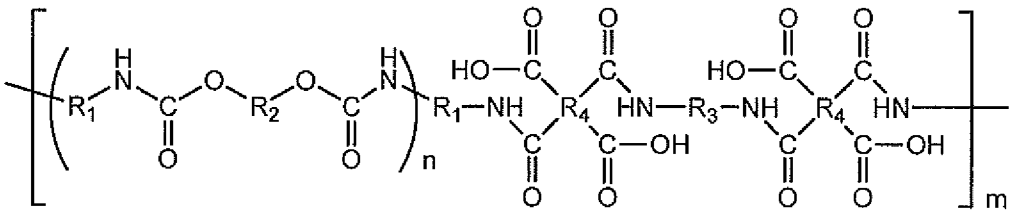

(g)

wherein, $R_1$ to $R_4$, n and m are the same as above.

Preferably, the polyurethane-urea compound (e) and the tetracarboxylic dianhydride (f) are mixed together so that the mixing ratio (mol) between the diamine compound (d) and the tetracarboxylic dianhydride (f) used to synthesize the polyurethane-urea compound (e) is 1:2 to 1:2.02 in the ratio between diamine compound (d) and the tetracarboxylic dianhydride (f). This ensures the introduction of the imide units into the urea bond site.

Examples of usable solvents include the same solvents as exemplified above in the solution polymerization reaction of the reaction formula (B). When the polyurethane-urea compound (e) is obtained by the solution polymerization reaction in the reaction formula (B), the imidization reaction may be carried out in the solvent.

Subsequently, the PUA solution thus obtained is poured into, for example, a centrifugal molding machine and then formed into a sheet shape by centrifugal molding at 100°C to 300°C, preferably 135°C to 200°C, and more preferably 150°C to 170°C, at 100 to 2,000 rpm for 30 minutes to 2 hours, thereby obtaining a PUA sheet.

Then, the sheet-shaped imide-modified elastomer (polyurethane-imide, PUI) represented by the general formula (I) can be obtained by subjecting the PUA sheet to a heat treatment (dehydration condensation reaction). Preferably, the heat treatment is carried out under the conditions that the PUA sheet is not pyrolyzed, specifically under the reduced pressure conditions at 150°C to 450°C, preferably 150°C to 250°C for about 1 to 5 hours. The resulting sheet (the PUI sheet) has a thickness of approximately 50 to 500 μm.

When the imidization reaction is carried out in the absence of a solvent, the reaction can also be carried out within an extruder provided with heating means having an exhaust system, besides any usual stirring tank reactor. Therefore, the obtained imide-modified elastomer (I) can be extruded and directly molded into a film shape or a plate shape.

The imide-modified elastomer (I) thus obtained is a rubber-like material having a pliable elastic modulus and has high strength and high thermal resistance. Specifically, its storage elastic modulus E' at 50°C is preferably $5\times10^6$ to $5\times10^8$ Pa. The storage elastic modulus is a value measured by using a dynamic viscoelasticity measuring instrument as will be described later. The imide-modified elastomer (I) having the pliable elastic modulus usually has a glass transition temperature (Tg) of -30°C to -60°C, having a wide temperature range of rubber-like elastic region. The reasons why the imide-modified elastomer (I) is the rubber-like material having a pliable elastic modulus and has high strength and high thermal resistance seem to be as follows. That is, as described earlier, in the imide-modified elastomer (I) of the invention, the two successive imide units can be introduced into the main chain at a desired ratio (an imide fraction) while controlling the distribution thereof, so that the aggregation of hard segments composed of these imide units can become uniform and strong. Hence, the imide-modified elastomer (I) forms a more uniform and stronger microphase separation structure, and the glass transition temperature thereof is lowered to widen the temperature range of the rubber-like elastic region. As a result, even when the imide-modified elastomer (I) contains polyurethane as the elastomer component and becomes the rubber-like material having a pliable elastic modulus, it can have high strength and high thermal resistance.

The weight average molecular weight of the imide-modified elastomer (I) is 10,000 to 1000,000, preferably 50,000 to 800,000, and more preferably 50,000 to 500,000. In contrast, strength and thermal resistance might be lowered when the molecular weight is smaller than 10,000, and molding property might be lowered when it exceeds 1000,000. These weight average molecular weights are obtained by measuring the PUA solution through GPC, and expressing the obtained measured value in terms of polystyrene. The reason why instead of the imide-modified elastomer (I), the PUA solution is measured by GPC is that the imide-modified elastomer (I) is insoluble in the solvent.

The imide-modified elastomer of the invention is the rubber-like material having a pliable elastic modulus and has high strength and high thermal resistance, as well as thermoplasticity, thus facilitating its molding by an injection molding machine, an extrusion molding machine and a blow molding machine which are usually employed. The imide-modified elastomer is applicable to sheets, films, tubes, hoses, roll gears, packing materials, sound insulating materials, vibration isolating materials, boots, gaskets, belt laminate products, coating materials, separation membranes for pervaporation, optical non-linear materials, elastic fibers, piezoelectric elements, actuators, other various types of car parts,

industrial mechanical parts and sports products. These applications are cited merely by way of example and without limitation.

The imide-modified elastomer of the invention will be described in detail with reference to synthesis examples and examples, but it is to be understood that the invention is not limited to the following synthesis examples and examples.

The following 18 kinds of imide-modified elastomers were used in the examples and comparative examples.

**Synthesis Example 1**

An imide-modified elastomer (1) was synthesized according to the following formulas.

[Chemical formula 7]

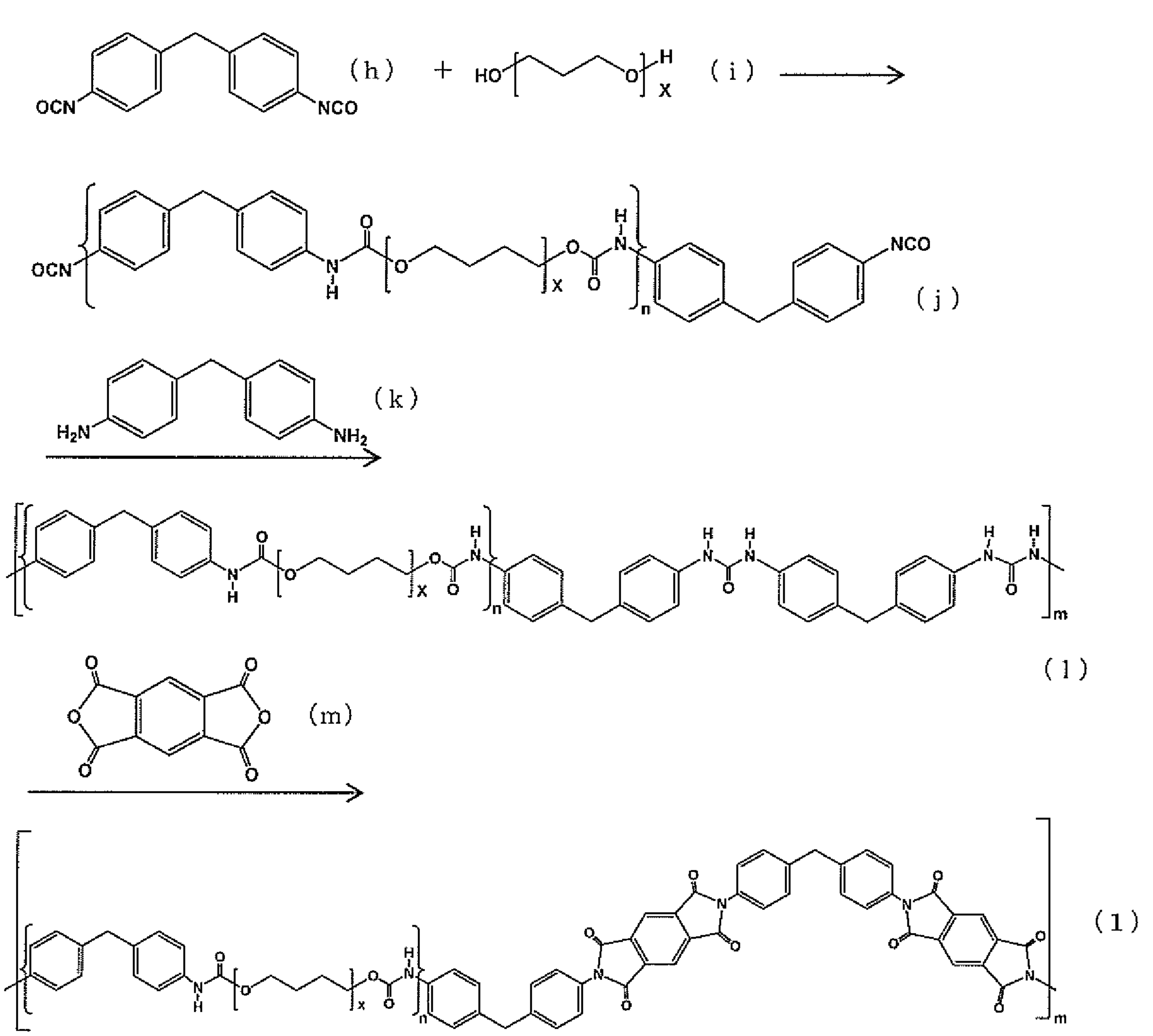


wherein, n represents an integer of 1 to 100, m represents an integer of 2 to 100, and x represents an integer of 5 to 100.

<Synthesis of Urethane Prepolymer (j)>

Firstly, 4,4'-diphenyl methane diisocyanate (MDI) (h), manufactured by Nippon Polyurethane Industry Co., Ltd., was vacuum distilled. Poly(oxytetramethylene)glycol (PTMG) (i), whose product name is "PTMG1000" having a weight average molecular weight of 1,000 manufactured by Hodogaya Chemical Co., Ltd., was vacuum dried at 80°C and 2 to 3 mmHg for 24 hours.

Subsequently, 30.4 g of the MDI (h) and 69.6 g of the PTMG (i) were put in a 500-ml-four-mouth separable

flask provided with a stirrer and a gas introducing tube, and stirred in argon gas atmosphere at 80°C for 2 hours, thereby obtaining urethane prepolymer (j) having an isocyanate group at both ends of each molecular. The urethane prepolymer (j) was measured by GPC, and the weight average molecular weight thereof in terms of polystyrene was $1.5 \times 10^4$.

<Synthesis of Polyurethane-Urea Compound (1)>

A solution of 10g of the urethane prepolymer (j) obtained above in 60 ml of dehydrated N-methyl-2-pyrrolidone (NMP), and a solution of 1.034 g of 4,4'-diaminodiphenylmethane (MDA) (k) in 20 ml of dehydrated NMP were put in a 500-ml-four-mouth separable flask provided with a stirrer and a gas introducing tube, and stirred in argon gas atmosphere at room temperature (23°C) for 24 hours, thereby obtaining a solution of polyurethane-urea compound (1).

<Synthesis of Imide-Modified Elastomer (1)>

Into the solution of the polyurethane-urea compound (1) obtained above, 2.276 g of pyromellitic dianhydride (PMDA) (m) was added and stirred in argon gas atmosphere at 150°C for 2 hours, thereby obtaining a polyurethane amic acid (PUA) solution. The PUA solution thus obtained was then poured into a centrifugal molding machine and subjected to centrifugal molding at 150°C and 1,000 rpm for 1 hour, thereby obtaining a PUA sheet. The PUA sheet was then subjected to a heat treatment (dehydration condensation reaction) in a vacuum desiccator at 200°C for 2 hours, thereby obtaining a sheet-shaped imide-modified elastomer (1) (a PUI sheet) having a thickness of 100 $\mu$m (35% by weight of imide fraction). This imide fraction was a value calculated from the above-mentioned equation ($\alpha$).

The weight average molecular weight of the obtained imide-modified elastomer (1) was 57,000. The IR spectrum of the imide-modified elastomer (1) was measured by KBr method. The result is shown in Fig. 1.
As apparent from Fig. 1, the absorption derived from the imide ring was observed at 1780 $cm^{-1}$, 1720 $cm^{-1}$ and 1380 $cm^{-1}$.

**Synthesis Example 2**

An urethane prepolymer (j) having a weight average molecular weight of $2.5 \times 10^4$ was obtained in the same manner as in Synthesis Example 1, except to use 27.3 g of the MDI (h) instead of 30.4 g, and 72.7 g of the PTMG (i) instead of 69.6 g. Subsequently, a solution of a polyurethane-urea compound (1) was obtained in the same manner as in Synthesis Example 1, except to use 0.721 g of the MDA (k) instead of 1.034 g.

A sheet-shaped imide-modified elastomer (2) (a PUI sheet) having a thickness of 100 $\mu$m (25% by weight of imide fraction) was obtained in the same manner as in Synthesis Example 1, except to add 1.586 g of the PMDA (m) instead of 2.276 g to the solution of the polyurethane-urea compound (1). The IR spectrum of the imide-modified elastomer (2) was measured in the same manner as in Synthesis Example 1. The result is shown in Fig. 2.
As apparent from Fig. 2, the absorption derived from the imide ring was observed at 1780 $cm^{-1}$, 1720 $cm^{-1}$ and 1380 $cm^{-1}$.

**Synthesis Example 3**

An urethane prepolymer (j) having a weight average molecular weight of $4.6 \times 10^4$ was obtained in the same manner as in Synthesis Example 1, except to use 23.8 g of the MDI (h) instead of 30.4 g, and 76.2 g of the PTMG (i) instead of 69.6 g. Subsequently, a solution of a polyurethane-urea compound (1) was obtained in the same manner as in Synthesis Example 1, except to use 0.378 g of the MDA (k) instead of 1.034 g.

A sheet-shaped imide-modified elastomer (3) (a PUI sheet) having a thickness of 100 $\mu$m (15% by weight of imide fraction) was obtained in the same manner as in Synthesis Example 1, except to add 0.831 g of the PMDA (m) instead of 2.276 g to the solution of the polyurethane-urea compound (1). The IR spectrum of the imide-modified elastomer (3) was measured in the same manner as in Synthesis Example 1. The result is shown in Fig. 3.
As apparent from Fig. 3, the absorption derived from the imide ring was observed at 1780 $cm^{-1}$, 1720 $cm^{-1}$ and 1380 $cm^{-1}$.

**Synthesis Example 4**

An urethane prepolymer (j) having a weight average molecular weight of $1.5 \times 10^4$ was obtained in the same manner as in Synthesis Example 1, and a solution of a polyurethane-urea compound was obtained in the same manner as in Synthesis Example 1, except to use 0.753 g of 1,8-octamethylenediamine (OMDA) instead of 1.034 g of the MDA (k).

Subsequently, a sheet-shaped imide-modified elastomer (4) (a PUI sheet) having a thickness of 100 $\mu$m (35% by weight of imide fraction) was obtained in the same manner as in Synthesis Example 1, except to use the obtained polyurethane-urea compound.

**Synthesis Example 5**

An urethane prepolymer (j) having a weight average molecular weight of $1.5 \times 10^4$ was obtained in the same manner as in Synthesis Example 1, and a solution of a polyurethane-urea compound was obtained in the same manner as in Synthesis Example 1, except to use 1.045 g of 1,12-dodecamethylene diamine (DMDA) instead of 1.034 g of the MDA (k).

Subsequently, a sheet-shaped imide-modified elastomer (5) (a PUI sheet) having a thickness of 100 μm (35% by weight of imide fraction) was obtained in the same manner as in Synthesis Example 1, except to use the obtained polyurethane-urea compound.

**Synthesis Example 6**

An urethane prepolymer (j) having a weight average molecular weight of $1.5 \times 10^4$ was obtained in the same manner as in Synthesis Example 1, and a solution of a polyurethane-urea compound was obtained in the same manner as in Synthesis Example 1, except to use 1.045 g of 4,4'-diaminodiphenylether (ODA) instead of 1.034 g of the MDA (k).

Subsequently, a sheet-shaped imide-modified elastomer (6) (a PUI sheet) having a thickness of 100 μm (35% by weight of imide fraction) was obtained in the same manner as in Synthesis Example 1, except to use the obtained polyurethane-urea compound.

**Synthesis Example 7**

An urethane prepolymer (j) having a weight average molecular weight of $4.6 \times 10^4$ was obtained in the same manner as in Synthesis Example 3, and a solution of a polyurethane-urea compound was obtained in the same manner as in Synthesis Example 3, except to use 0.221 g of 1,6-hexamethylenediamine (HMDA) instead of 0.378 g of the MDA (k).

Subsequently, a sheet-shaped imide-modified elastomer (7) (a PUI sheet) having a thickness of 100 μm (15% by weight of imide fraction) was obtained in the same manner as in Synthesis Example 3, except to use the obtained polyurethane-urea compound.

**Synthesis Example 8**

An urethane prepolymer (j) having a weight average molecular weight of $1.5 \times 10^4$ was obtained in the same manner as in Synthesis Example 1, and a solution of a polyurethane-urea compound was obtained in the same manner as in Synthesis Example 1, except to use 1.524 g of 1,3-bis(4-aminophenoxy)benzene (TPE-R) instead of 1.034 g of the MDA (k).

Subsequently, a sheet-shaped imide-modified elastomer (8) (a PUI sheet) having a thickness of 100 μm (35% by weight of imide fraction) was obtained in the same manner as in Synthesis Example 1, except to use the obtained polyurethane-urea compound. The IR spectrum of the imide-modified elastomer (8) was measured by KBr method, and the absorption derived from the imide ring was observed at 1780 $cm^{-1}$, 1.720 $cm^{-1}$ and 1380 $cm^{-1}$.

**Synthesis Example 9**

An urethane prepolymer (j) having a weight average molecular weight of $1.5 \times 10^4$ was obtained in the same manner as in Synthesis Example 1, and a solution of a polyurethane-urea compound was obtained in the same manner as in Synthesis Example 1, except to use 1.524 g of 1,4-bis(4-aminophenoxy)benzene (TPE-Q) instead of 1.034 g of the MDA (k).

Subsequently, a sheet-shaped imide-modified elastomer (9) (a PUI sheet) having a thickness of 100 μm (35% by weight of imide fraction) was obtained in the same manner as in Synthesis Example 1, except to use the obtained polyurethane-urea compound. The IR spectrum of the imide-modified elastomer (9) was measured by KBr method, and the absorption derived from the imide ring was observed at 1780 $cm^{-1}$, 1720 $cm^{-1}$ and 1380 $cm^{-1}$.

**Synthesis Example 10**

A solution of a polyurethane-urea compound was obtained in the same manner as in Synthesis Example 8. Subsequently, a sheet-shaped imide-modified elastomer (10) (a PUI sheet) having a thickness of 100 μm (35% by weight of imide fraction) was obtained in the same manner as in Synthesis Example 8, except to add 3.362 g of benzophenone-3,4,3',4'-tetracarboxylic dianhydride (BTDA) instead of 2.276 g of the PMDA (m) to the solution of the obtained polyurethane-urea compound. The IR spectrum of the imide-modified elastomer (10) was measured by KBr method, and the absorption derived from the imide ring was observed at 1780 $cm^{-1}$, 1720 $cm^{-1}$ and 1380 $cm^{-1}$.

**Synthesis Example 11**

A solution of a polyurethane-urea compound was obtained in the same manner as in Synthesis Example 9. Subsequently, a sheet-shaped imide-modified elastomer (11) (a PUI sheet) having a thickness of 100 μm (35% by weight of imide fraction) was obtained in the same manner as in Synthesis Example 9, except to add 3.362 g of BTDA instead of 2.276 g of the PMDA (m) to the solution of the obtained polyurethane-urea compound. The IR spectrum of the imide-modified elastomer (11) was measured by KBr method, and the absorption derived from the imide ring was observed at 1780 $cm^{-1}$, 1720 $cm^{-1}$ and 1380 $cm^{-1}$.

**Synthesis Example 12**

Firstly, polycarbonate diol (PCD), whose product name of " NIPPOLLAN 981" having a weight average molecular weight of 1,000 manufactured by Nippon Polyurethane Industry Co., Ltd., was vacuum dried at 80°C and 2 to 3 mmHg for 24 hours. Subsequently, urethane prepolymer having a weight average molecular weight of $0.8\times10^4$ was obtained in the same manner as in Synthesis Example 1, except to use 69.6 g of the PCD instead of 69.6 g of the PTMG.
A sheet-shaped imide-modified elastomer (12) (a PUI sheet) having a thickness of 100 μm (35% by weight of imide fraction) was obtained in the same manner as in Synthesis Example 1, except to use the obtained urethane-prepolymer. The IR spectrum of the imide-modified elastomer (12) was measured by KBr method, and the absorption derived from the imide ring was observed at 1780 $cm^{-1}$, 1720 $cm^{-1}$ and 1380 $cm^{-1}$.

**Synthesis Example 13**

Firstly, polycaprolactonediol (PCL), whose product name is "PLACCEL 210" having a weight average molecular weight of 1,000 manufactured by DAICEL CHEMICAL INDUSTRIES, LTD., was vacuum dried at 80°C and 2 to 3 mmHg for 24 hours. Subsequently, urethane prepolymer having a weight average molecular weight of $0.6\times10^4$ was obtained in the same manner as in Synthesis Example 1, except to use 69.6 g of the PCL instead of 69.6 g of the PTMG.
A sheet-shaped imide-modified elastomer (13) (a PUI sheet) having a thickness of 100 μm (35% by weight of imide fraction) was obtained in the same manner as in Synthesis Example 1, except to use the obtained urethane-prepolymer. The IR spectrum of the imide-modified elastomer (13) was measured by KBr method, and the absorption derived from the imide ring was observed at 1780 $cm^{-1}$, 1720 $cm^{-1}$ and 1380 $cm^{-1}$.

**Synthesis Example 14**

An urethane prepolymer having a weight average molecular weight of $0.8\times10^4$ was obtained in the same manner as in Synthesis Example 12, and a solution of a polyurethane-urea compound was obtained in the same manner as in Synthesis Example 1, except to use 1.525 g of TPE-R instead of 1.034 g of the MDA.
Subsequently, a sheet-shaped imide-modified elastomer (14) (a PUI sheet) having a thickness of 100 μm (35% by weight of imide fraction) was obtained in the same manner as in Synthesis Example 1, except to use the obtained polyurethane-urea compound. The IR spectrum of the imide-modified elastomer (14) was measured by KBr method, and the absorption derived from the imide ring was observed at 1780 $cm^{-1}$, 1720 $cm^{-1}$ and 1380 $cm^{-1}$.

**Synthesis Example 15**

An urethane prepolymer having a weight average molecular weight of $0.8\times10^4$ was obtained in the same manner as in Synthesis Example 12, and a solution of a polyurethane-urea compound was obtained in the same manner as in Synthesis Example 1, except to use 1.525 g of TPE-Q instead of 1.034 g of the MDA.
Subsequently, a sheet-shaped imide-modified elastomer (15) (a PUI sheet) having a thickness of 100 μm (35% by weight of imide fraction) was obtained in the same manner as in Synthesis Example 1, except to use the obtained polyurethane-urea compound. The IR spectrum of the imide-modified elastomer (15) was measured by KBr method, and the absorption derived from the imide ring was observed at 1780 $cm^{-1}$, 1720 $cm^{-1}$ and 1380 $cm^{-1}$.

**Synthesis Example 16**

An urethane prepolymer having a weight average molecular weight of $0.6\times10^4$ was obtained in the same manner as in Synthesis Example 13, and a solution of a polyurethane-urea compound was obtained in the same manner as in Synthesis Example 1, except to use 1.525 g of TPE-R instead of 1.034 g of the MDA.
Subsequently, a sheet-shaped imide-modified elastomer (16) (a PUI sheet) having a thickness of 100 μm (35% by weight of imide fraction) was obtained in the same manner as in Synthesis Example 1, except to use the obtained

polyurethane-urea compound. The IR spectrum of the imide-modified elastomer (16) was measured by KBr method, and the absorption derived from the imide ring was observed at 1780 $cm^{-1}$, 1720 $cm^{-1}$ and 1380 $cm^{-1}$.

**Synthesis Example 17**

An urethane prepolymer having a weight average molecular weight of $0.6 \times 10^4$ was obtained in the same manner as in Synthesis Example 13, and a solution of a polyurethane-urea compound was obtained in the same manner as in Synthesis Example 1, except to use 1.525 g of TPE-Q instead of 1.034 g of the MDA.

Subsequently, a sheet-shaped imide-modified elastomer (17) (a PUI sheet) having a thickness of 100 μm (35% by weight of imide fraction) was obtained in the same manner as in Synthesis Example 1, except to use the obtained polyurethane-urea compound. The IR spectrum of the imide-modified elastomer (17) was measured by KBr method, and the absorption derived from the imide ring was observed at 1780 $cm^{-1}$, 1720 $cm^{-1}$ and 1380 $cm^{-1}$.

**Comparative Synthesis Example 1**

A sheet-shaped imide-modified elastomer (18) (a PUI sheet) having a thickness of 100 μm (45% by weight of imide fraction) as shown in the following formula (18), containing no polyurethane as the elastomer component, was obtained by using MDI as diisocyanate, "Elastomer 1000" manufactured by IHARA CHEMICAL INDUSTRY CO., LTD., and PMDA as tetracarboxylic dianhydride, according to the method described in Japanese Unexamined Patent Publication No. 11-106507.

[Chemical formula 8]

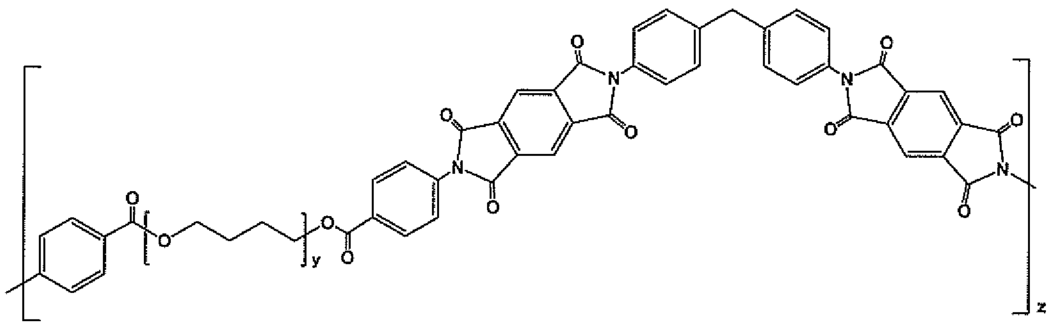

(1 8)

wherein, y represents an integer of 10 to 100, and z represents an integer of 2 to 500.

These imide-modified elastomers (1) to (18) obtained above are shown in Table 1.

[Table 1]

| Imide-modified elastomer | (1) | (2) | (3) | (4) | (5) | (6) | (7) | (8) | (9) | (10) | (11) | (12) | (13) | (14) | (15) | (16) | (17) | (18) |
|---|---|---|---|---|---|---|---|---|---|---|---|---|---|---|---|---|---|---|
| Urethane prepolymer molecular weight (Mw) | $15\times10^4$ | $25\times10^4$ | $4.6\times10^4$ | $1.5\times10^4$ | $1.5\times10^4$ | $1.5\times10^4$ | $4.6\times10^4$ | $1.5\times10^4$ | $1.5\times10^4$ | $1.5\times10^4$ | $1.5\times10^4$ | $0.8\times10^4$ | $0.6\times10^4$ | $0.8\times10^4$ | $0.8\times10^4$ | $0.6\times10^4$ | $0.6\times10^4$ | - |
| Imide fraction (% by weight) | 35 | 25 | 15 | 35 | 35 | 35 | 15 | 35 | 35 | 35 | 35 | 35 | 35 | 35 | 35 | 35 | 35 | 45 |
| Polyol | PTMG | PTMG | PTMG | PTMG | PTMG | PTMG | PTMG | PTMG | PTMG | PTMG | PTMG | PCD | PCL | PCD | PCD | PCL | PCL | - |
| Diamine compound | MDA | MDA | MDA | OMDA | DMDA | ODA | HMDA | TPE-R | TPE-Q | TPE-R | TPE-Q | MDA | MDA | TPE-R | TPE-Q | TPE-R | TPE-Q | MDA |
| Tetracarboxylic dianhydride | PMDA | PMDA | PMDA | PMDA | PMDA | PMDA | PMDA | PMDA | PMDA | BTDA | BTDA | PMDA | PMDA | PMDA | PMDA | PMDA | PMDA | PMDA |

**Example 1**

Each of the PUI sheets of the imide-modified elastomers (1) to (3) obtained in Synthesis Examples 1 to 3 was subjected to tensile test, dynamic viscoelasticity test and thermal analysis test. Their respective test methods are described below, and the results thereof are shown in Table 2 and Figs. 4 to 6.

<Tensile Test Method>

These PUI sheets were punched out with a No. 3 dumbbell, and the stress, breaking strength (TB) and elongation (EB) thereof were measured under the conditions of an intergauge distance of 20 mm/min and 500 mm/min according to JIS K6251, respectively.

<Dynamic Viscoelasticity Test Method>

Measurements were carried out using a dynamic viscoelasticity measuring instrument manufactured by Seiko Instruments Inc., at 20 Hz and 5°C/min in the step of raising temperature from -100°C to 400°C. Glass transition temperature (Tg) was obtained from the peak temperature of tanδ.

<Thermal Analysis Test Method>

Measurements were carried out using a thermogravimetric analysis instrument, "TG/DTA 6200" manufactured by Seiko Instruments Inc., in nitrogen gas atmosphere at 10°C/min in the step of raising temperature from room temperature to 1000°C.

**Comparative Example 1**

Commercially available polyurethane was brought into a sheet-shaped one having a thickness of 100 μm and then subjected to the tensile test, dynamic viscoelasticity test and thermal analysis test in the same manner as in Example 1. The results thereof are shown in Table 2 and Figs. 5 and 6. The used polyurethane was as follows.
Polyurethane whose product name is "Miractran E394PDTA" manufactured by Nippon Miractran Co, Ltd., and composition is PTMG1000/MDA/1,4-butanediol (BD).

**Comparative Example 2**

The PUI sheet of the imide-modified elastomer (18) obtained in Comparative Synthesis Example 1 was subjected to the tensile test, dynamic viscoelasticity test and thermal analysis test in the same manner as in Example 1.
The results thereof are shown in Table 2 and Fig. 7.
[Table 2]

| Imide-modified elastomer | (1) | (2) | (3) | Polyurethane | (18) |
|---|---|---|---|---|---|
| Urethane prepolymer molecular weight (Mw) | $1.5\times10^4$ | $2.5\times10^4$ | $4.6\times10^4$ | - | - |
| Imide fraction (% by weight) | 35 | 25 | 15 | - | 45 |
| Diamine compound | MDA | MDA | MDA | - | MDA |
| Breaking strength TB (MPa) | 48 | 12 | 10 | 20 | 42 |
| Elongation EB (%) | 480 | 690 | 610 | 390 | 630 |
| Glass transition temperature Tg (°C) | -44 | -45 | -48 | -37 | -45 |
| Storage elastic modulus at 50°C E'(Pa) | $8.5\times10^7$ | $3.1\times10^7$ | $1.3\times10^7$ | $1.3\times10^7$ | $1.5\times10^8$ |

As apparent from Table 2, in the imide-modified elastomers (1) to (3) containing polyurethane as the elastomer component, by controlling the molecular weight of urethane prepolymer, two successive imide units can be introduced into the main chain at a desired ratio (an imide fraction), while controlling the distribution thereof. As can be seen from Table 2 and Fig. 4, these imide-modified elastomers (1) to (3) have excellent physical strength (stress and breaking strength), a low glass transition temperature of -44°C to -48°C and excellent cold resistance, particularly, more excellent

pliability (elongation) than polyurethane. As apparent from Fig. 5, these imide-modified elastomers (1) to (3) are rubber-like materials having a pliable elastic modulus, and have a wide temperature range of the rubber-like elastic region. As apparent from Fig. 6, they have improved thermal resistance than polyurethane.

On the other hand, as apparent from Table 2 and Fig. 7, the imide-modified elastomer (18) is inferior in pliability to these imide-modified elastomers (1) to (3). These results show that the imide-modified elastomer (18) employs the diamine compound having a molecular weight of around several thousands, making it difficult to obtain a pliable elastomer. In contrast, it can be seen that according to the invention, the elastomer segment amount can be suitably controlled by urethane prepolymer synthesis, achieving more pliable imide-modified elastomers.

## Example 2

Each of the PUI sheets of the imide-modified elastomers (4) to (6) obtained in Synthesis Examples 4 to 6 were subjected to the tensile test and dynamic viscoelasticity test in the same manner as in Example 1. The results thereof are shown in Table 3 and Figs. 8 and 9. The test results of the imide-modified elastomer (1) are also shown for comparison.

[Table 3]

| Imide-modified elastomer | (4) | (5) | (6) | (1) |
|---|---|---|---|---|
| Diamine compound | OMDA | DMDA | ODA | MDA |
| Imide fraction (% by weight) | 35 | 35 | 35 | 35 |
| Breaking strength TB (MPa) | 40 | 30 | 55 | 48 |
| Elongation EB (%) | 400 | 520 | 420 | 480 |
| Glass transition temperature Tg (°C) | -44 | -44 | -44 | -44 |
| Storage elastic modulus E'(Pa) at 50°C | $9.2\times10^7$ | $4.2\times10^7$ | $8.5\times10^7$ | $8.5\times10^7$ |

As apparent from Table 3, these imide-modified elastomers of the invention enable the imide units to have a desired structure by using various types of diamine compounds. As apparent from Table 3 and Figs. 8 and 9, these imide elastomers (4) to (6) obtained by using the various types of diamine compounds have excellent physical strength (stress and breaking strength) and excellent cold resistance, and are rubber-like materials having a pliable elastic modulus, as well as a wide temperature range of the rubber-like elastic region and excellent thermal resistance.

## Example 3

The PUI sheet of the imide-modified elastomer (7) obtained in Synthesis Example 7 was subjected to the tensile test and dynamic viscoelasticity test in the same manner as in Example 1. The results thereof are shown in Table 4 and Figs. 10 and 11. The test results of the imide-modified elastomers (1) and (3), and the polyurethane used in Comparative Example 1 are also shown for comparison. In the dynamic viscoelasticity test, the test result of only the elastomer (1) out of the elastomers (1) and (3) is shown.

[Table 4]

| Imide-modified elastomer | (1) | (7) | (3) | Polyurethane |
|---|---|---|---|---|
| Diamine compound | MDA | HMDA | MDA | - |
| Imide fraction (% by weight) | 35 | 15 | 15 | - |
| Breaking strength TB (MPa) | 48 | 32 | 10 | 20 |
| Elongation EB (%) | 480 | 490 | 610 | 390 |
| Glass transition temperature Tg(°C) | -44 | -48 | -48 | -37 |
| Storage elastic modulus at 50°C E'(Pa) | $8.5\times10^7$ | $1.3\times10^7$ | $1.3\times10^7$ | $1.3\times10^7$ |

As apparent from Table 4 and Figs. 10 and 11, the imide-modified elastomer (7) using 1,6-hexamethylenediamine (HMDA) as the diamine compound and having an imide fraction of 15% by weight has more excellent physical strength (stress and breaking strength) and substantially the same elasticity with respect to polyurethane, and has a wide temperature range of the rubber-like elastic region and excellent thermal resistance. Especially, as apparent from Fig. 11, the imide-modified elastomer (7) has thermoplasticity, and its plasticization temperature is 100°C or above higher than that of polyurethane.

**Example 4**

Each of the PUI sheets of the imide-modified elastomers (1), (3) and (7) obtained in Synthesis Examples 1, 3 and 7 were subjected to the tearing test, thermal aging test and solvent resistance test, respectively. Their respective test methods are shown below, and the results thereof are shown in Figs. 12 to 15.

<Tearing Test Method>

Each PUI sheet was punched out by a dumbbell into an angle shape without a notch, and measured at 500m/min according to JIS K6252.
In the tearing test, among the PUI sheets of the imide-modified elastomers (1), (3) and (7), those of the elastomers (1) and (7) except the elastomer (3) were evaluated.

<Thermal Aging Test Method>

These PUI sheets were punched out with a No. 3 dumbbell, and thermally aged in a gear oven at 150°C for 72 hours. Thereafter, the tensile test was carried out under the same conditions as the above-mentioned tensile test method according to JIS K6257. The strength drop rate (%) was calculated by applying the breaking strengths before and after thermal aging to the following equation: [(Breaking strength after thermal aging/Breaking strength before thermal aging)-1]×100.

<Solvent Resistance Test Method>

Each PUI sheet was immersed in toluene and tetrahydroflane (THF) at room temperature (23°C) for 96 hours, and the weight increase after immersion was calculated. More specifically, a test piece having a width of 2.0 cm and a length of 3.0 cm was cut out from each PUI sheet. The test piece was then immersed in a solvent under the above-mentioned conditions, and its swelling rate (%) was calculated by applying the weights before and after immersion to the following equation (β).

[Equation 2]

$$\text{Swelling rate (\%)} = [(S2-S1)/S1]\times 100 \quad \cdots \ (\beta)$$

wherein, S1 is the weight of a test piece before immersion, and S2 is the weight of the test piece after immersion.

**Comparative Example 3**

Commercially available polyurethane was subjected to the tearing test, thermal aging test and solvent resistance test in the same manner as in Example 4. The results thereof are shown in Figs. 12 to 14. The used polyurethane was the same as that used in Comparative Example 1.
As apparent from Figs. 12 to 15, the imide-modified elastomers (1), (3) and (7) have excellent tearing strength, thermal resistance and chemical resistance. Among others, the elastomer having a higher imide fraction is superior in tearing strength, thermal resistance and chemical resistance. As apparent from Fig. 12, these elastomers have higher tearing strength than polyurethane. It can be seen from Fig. 14 that they have improved thermal resistance than polyurethane. In the solvent resistance test, polyurethane was completely dissolved in THF. As can be seen from this result and Fig. 14, these imide-modified elastomers (1), (3) and (7) are superior in solvent resistance to polyurethane.

**Example 5**

Each of the PUI sheets of the imide-modified elastomers (8) to (11) obtained in Synthesis Examples 8 to 11 were subjected to the tensile test and dynamic viscoelasticity test in the same manner as in Example 1. The results

thereof are shown in Table 5. The solvent resistance test (toluene) was carried out in the same manner as in Example 4. The results thereof are shown in Fig. 16. The test results of the imide-modified elastomer (1) are also shown for comparison.

[Table 5]

| Imide-modified elastomer | (8) | (9) | (10) | (11) | (1) |
|---|---|---|---|---|---|
| Diamine compound | TPE-R | TPE-Q | TPE-R | TPE-Q | MDA |
| Tetracarboxylic dianhydride | PMDA | PMDA | BTDA | BTDA | PMDA |
| Imide fraction (% by weight) | 35 | 35 | 35 | 35 | 35 |
| Breaking strength TB (MPa) | 43 | 71 | 51 | 44 | 48 |
| Elongation EB (%) | 390 | 480 | 510 | 360 | 480 |
| Glass transition temperature Tg (°C) | -49 | -44 | -59 | -60 | -44 |
| Storage elastic modulus at 50°C E'(Pa) 50°C | $1.3\times10^8$ | $1.7\times10^8$ | $3.2\times10^8$ | $3.5\times10^8$ | $8.5\times10^7$ |

As apparent from Table 5, the imide-modified elastomers (8) to (11), using TPE-R or TPE-Q as the diamine compound, and PMDA or BTDA as the tetracarboxylic dianhydride, have excellent physical strength (breaking strength) substantially identical to that of the imide-modified elastomer (1), and have a low glass transition temperature of -44°C to -60°C and excellent cold resistance and pliability (elongation). Particularly, these imide-modified elastomers (8) to (11) have excellent solvent resistance as apparent from Fig. 16. These results show that the use of TPE-R or TPE-Q as the diamine compound provides the imide-modified elastomer having excellent solvent resistance.

**Example 6**

Each of the PUI sheets of the imide-modified elastomers (12) to (17) obtained in Synthesis Examples 12 to 17 were subjected to the tensile test and dynamic viscoelasticity test in the same manner as in Example 1. In the tensile test, breaking elongation was evaluated as the elongation, and 100% tensile stress was also evaluated.

The tearing test, thermal aging test and solvent resistant test (toluene) were also carried out in the same manner as in Example 4. As the thermal aging conditions in the thermal aging test, the conditions of 96 hours at 150°C, 180°C and 200°C, respectively, were employed instead of the above-mentioned 72 hours at 150°C. Further, a stress relaxing test was carried out. Its test method is described below, and these results are also shown in Table 6.

<Stress Relaxing Test Method>

The PUI sheet was punched out with a No. 1 dumbbell and set at an interchuck distance of 50 mm and extended 5 mm at 500 mm/min and then stopped. The stress after an elapse of 30 seconds after the stop and the stress after an elapse of 3630 seconds after the stop were measured. The stress relaxing rate (%) was calculated by applying these measured values to the following equation: (Stress after 3630 sec/Stress after 30 sec)$\times$100.

**Comparative Example 4**

Commercially available thermally resistant polyester and thermally resistant polyurethane were brought into a sheet shape having a thickness of 100 $\mu$m. This was subjected to the tensile test, tearing test, stress relaxing test, thermal aging test, dynamic viscoelasticity test and solvent resistance test in the same manner as in Example 6. The results thereof are shown in Table 6. The used thermally resistant polyester and the used thermally resistant polyurethane were as follows.
Thermally resistant polyester whose product name is "PELPRENE C-2000" manufactured by TOYOBO CO., LTD.
Thermally resistant polyurethane whose product name is "Elastollan C85A50" manufactured by BASF Japan Ltd.

**Comparative Example 5**

A polyamide acid solution, whose product name is "U-VARNISH-A" manufactured by Ube Industries, Ltd., was poured into a centrifugal molding machine and then formed into a sheet shape by centrifugal molding at 150°C and 1,000 rpm for 1 hour. This was then subjected to a heat treatment (dehydration condensation reaction) in a vacuum

desiccator at 200°C for 2 hours, thereby obtaining a sheet-shaped polyimide resin having a thickness of 100 μm. The obtained polyimide resin sheet was subjected to the tensile test, tearing test, stress relaxing test, thermal aging test, dynamic viscoelasticity test and solvent resistance test in the same manner as in Example 6. The results thereof are shown in Table 6.

[Table 6]

| Imide-modified elastomer | | (12) | (13) | (14) | (15) | (16) | (17) | — | — | — |
|---|---|---|---|---|---|---|---|---|---|---|
| Composition | | PCD/MDI/ MDA/PMDA | PCL/MDI/ MDA/PMDA | PCD/MDI/ TPE-R/ PMDA | PCD/MDI/ TPE-Q/ PMDA | PCL/MDI/ TPE-R/ PMDA | PCL/MDI/ TPE-Q/ PMDA | Thermally resistant polyester | Thermally resistant polyurethane | Polyimide resin |
| 100% tensile stress (MPa) | | 29.5 | 17.8 | 28.4 | 33.3 | 20.7 | 21.8 | 19.0 | 6.09 | 196 |
| Breaking strength TB (MPa) | | 80.1 | 75.2 | 48.6 | 70.1 | 62.6 | 72.2 | 39.0 | 44.0 | 196 |
| Breaking elongation (%) | | 280 | 440 | 270 | 300 | 531 | 512 | 590 | 520 | 100 |
| Tearing strength (N/mm) | | 242.0 | 190.0 | 278.1 | 268.4 | 219.8 | 227.7 | 218.0 | 106.0 | 350.0 |
| Stress relaxing (%) | | 72 | 82 | 76 | 75 | 78 | 81 | 84 | 81 | 83 |
| Strength drop rate (%) | 150°C×96hrs. | +8 | -10 | 25 | -15 | 3 | -18 | -36 | -22.5 | |
| | 180°C×96hrs. | -43 | -64 | | | | | -39 | Dissolved | -10.0 |
| | 200°C×96hrs. | -52 (TB:39MPa) | -59 (TB:31MPa) | | | | | -51 (TB:19MPa) | Dissolved | -4 |
| Storage elastic modulus at 50°C E' (Pa) | | $1.5\times10^8$ | $5.9\times10^7$ | $2.5\times10^8$ | $3.5\times10^8$ | $1.3\times10^8$ | $2.2\times10^8$ | $9.6\times10^7$ | $3.2\times10^7$ | $4.5\times10^9$ |
| Solvent resistance (Toluene, Swelling rate (%)) | | 26 | 25 | 12 | 10 | 12 | 14 | 18 | 58 | 0 |

As apparent from Table 6, the imide-modified elastomers (12) to (17) have excellent physical strength (100% tensile stress, breaking strength, tearing strength and stress relaxing), as well as excellent pliability (breaking elongation and the storage elastic modulus E' at 50°C). These imide-modified elastomers have a small strength drop rate and hence have high thermal resistance.

Especially, the imide-modified elastomers (14) to (17), each using TPE-R or TPE-Q as the diamine compound, have excellent solvent resistance. These results show that the use of TPE-R or TPE-Q as the diamine compound provides the imide-modified elastomer having excellent solvent resistance.

On the other hand, the thermally resistant polyester have more excellent breaking elongation than the imide-modified elastomers (12) to (17), however, have low breaking strength. Its strength drop rate at 200°C is almost the same as those of the imide-modified elastomers (12) and (13), however, its breaking strength TB after 96 hours at 200°C (namely thermally aging) is small.

The thermally resistant polyurethane has more excellent breaking elongation than the imide-modified elastomers (12) to (17), however, has poor 100% tensile stress, breaking strength and tearing strength. Its strength drop rates at 180°C and 200°C are inferior to the imide-modified elastomers (12) and (13).

The polyimide resin has more excellent physical strength, thermal resistance and solvent resistance than the imide-modified elastomers (12) to (17), however, has low breaking elongation and low storage elastic modulus E' at 50°C, and poor pliability.

## Claims

1. An imide-modified elastomer represented by the following general formula (I):

[Chemical formula 9]

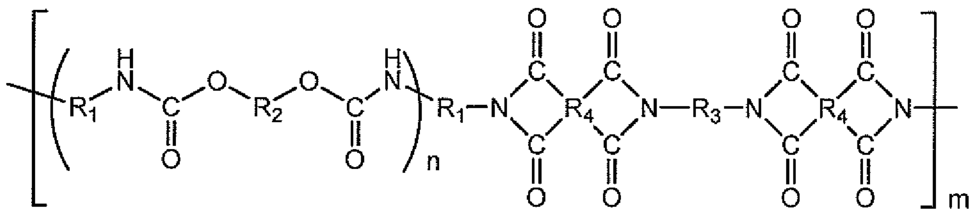

(I)

wherein, $R_1$ represents a divalent organic group having an aromatic ring or an aliphatic ring; $R_2$ represents a divalent organic group having a weight average molecular weight of 100 to 10,000; $R_3$ represents a divalent organic group having an aromatic ring, an aliphatic ring or an aliphatic chain; $R_4$ represents a tetravalent organic group having 4 or more carbon atoms; n represents an integer of 1 to 100; and m represents an integer of 2 to 100.

2. The imide-modified elastomer according to claim 1, wherein in the general formula (I), the $R_1$ is a residue except for isocyanate groups (-NCO) in diisocyanate capable of forming urethane prepolymer together with polyol, and the $R_2$ is a residue except for two hydroxyl groups (-OH) in polyol capable of forming urethane prepolymer together with diisocyanate.

3. The imide-modified elastomer according to claim 1 or 2, wherein in the general formula (I), the $R_3$ is a residue except for amino groups ($-NH_2$) in at least one diamine compound selected from aromatic diamine compounds having a carbon number of 6 to 27, aliphatic diamine compounds having a carbon number of 6 to 24 and alicyclic diamine compounds having a carbon number of 6 to 24, each of which can chain extend urethane prepolymer by urea bond.

4. The imide-modified elastomer according to any one of claims 1 to 3, wherein in the general formula (I), the $R_4$ is a residue of at least one kind of tetracarboxylic dianhydride selected from aromatic tetracarboxylic dianhydrides having a carbon number of 6 to 18 such as pyromellitic dianhydride (PMDA), oxydiphthalic dianhydride (ODPA), biphenyl-3,4,3',4'-tetracarboxylic dianhydride (BPDA), benzophenone-3,4,3',4'-tetracarboxylic dianhydride (BTDA), diphenylsulfone-3,4,3',4'-tetracarboxylic dianhydride (DSDA), 4,4'-(2,2-hexafluoroisopropylidene)bis(phthalic anhydride) (6FDA) and m(p)-terphenyl-3,4,3',4'-tetracarboxylic dianhydride; and alicyclic tetracarboxylic dianhydrides having a carbon number of 4 to 6 such as cyclobutane-1,2,3,4-tetracarboxylic dianhydride and 1-carboxymethyl-2,3,5-cyclopentanetricarboxylic-2,6:3,5-dianhydride, each of which can introduce an imide unit into a urea bond site.

**5.** The imide-modified elastomer according to any one of claims 1 to 4, wherein the imide-modified elastomer is a block copolymer in which urethane prepolymer having an isocyanate group at both ends of each molecule obtained from diisocyanate and polyol is chain extended with a diamine compound by urea bond, and an imide unit is introduced into an urea bond site by using tetracarboxylic dianhydride.

**6.** The imide-modified elastomer according to any one of claims 2 to 5, wherein the weight average molecular weight of the urethane prepolymer is 300 to 50,000.

**7.** The imide-modified elastomer according to any one of claims 2 to 6, wherein the polyol is at least one kind selected from polycarbonate polyol and polyester polyol.

**8.** The imide-modified elastomer according to any one of claims 3 to 7, wherein the diamine compound is 1,6-hexamethylenediamine.

**9.** The imide-modified elastomer according to any one of claims 3 to 7, wherein the diamine compound is at least one kind selected from 1,4-bis(4-aminophenoxy)benzene and 1,3-bis(4-aminophenoxy)benzene.

**10.** The imide-modified elastomer according to any one of claims 1 to 9, having an imide fraction of 5 to 45% by weight.

**11.** The imide-modified elastomer according to any one of claims 1 to 10, wherein the storage elastic modulus E' at 50°C is $5\times10^6$ to $5\times10^8$ Pa.

**12.** An imide-modified elastomer represented by the following formula (1):

[Chemical formula 10]

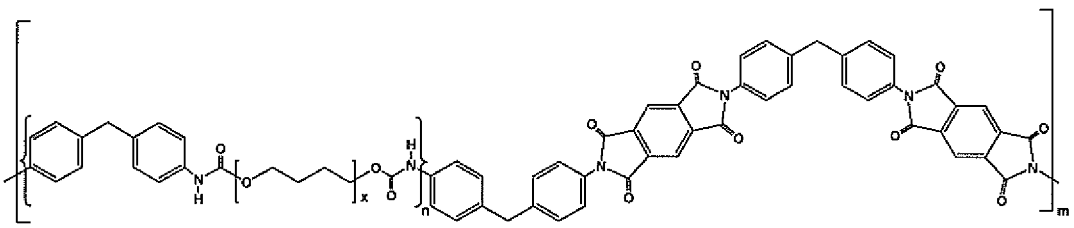

(1)

wherein, n represents an integer of 1 to 100, m represents an integer of 2 to 100, and x represents an integer of 10 to 100.

Fig. 1

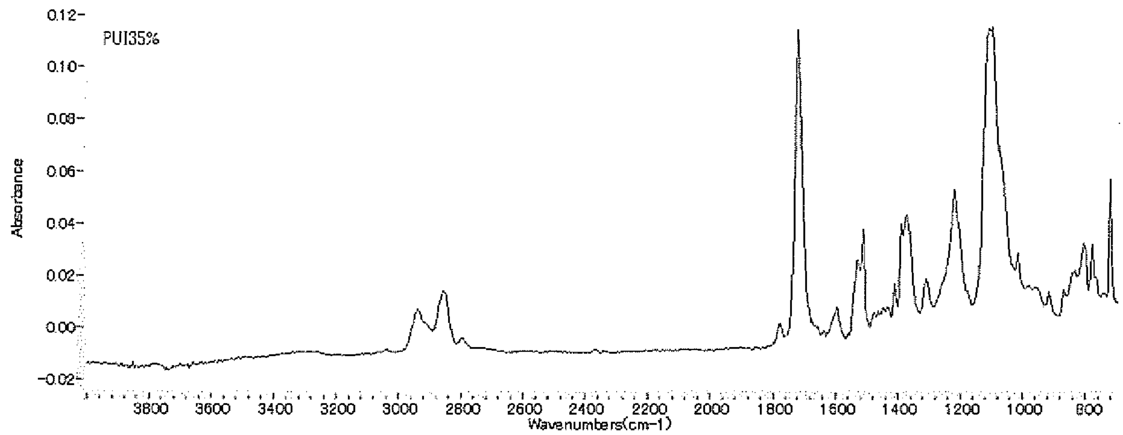


Fig. 2

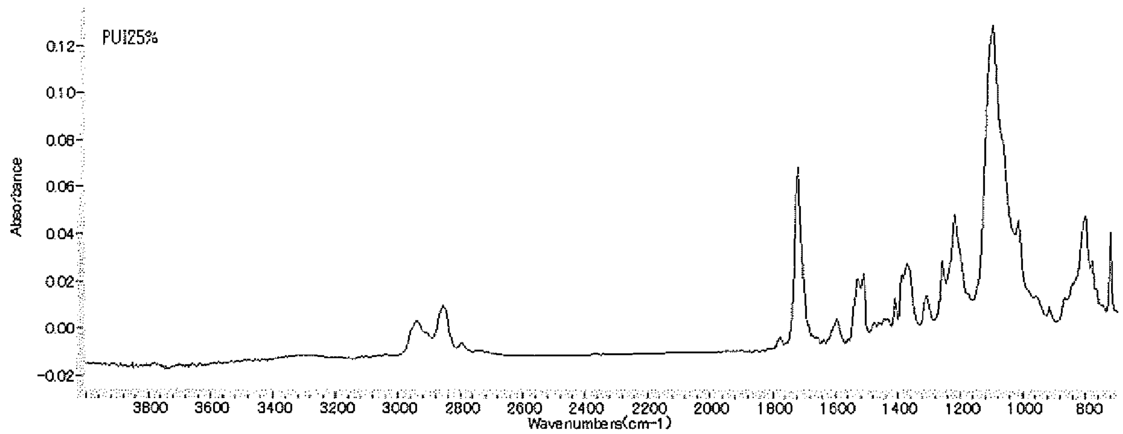


Fig. 3

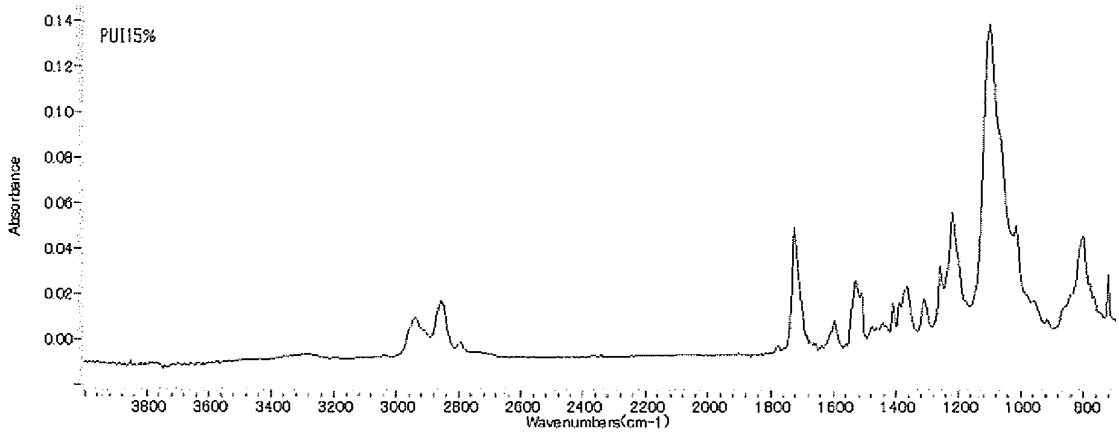

Fig. 4

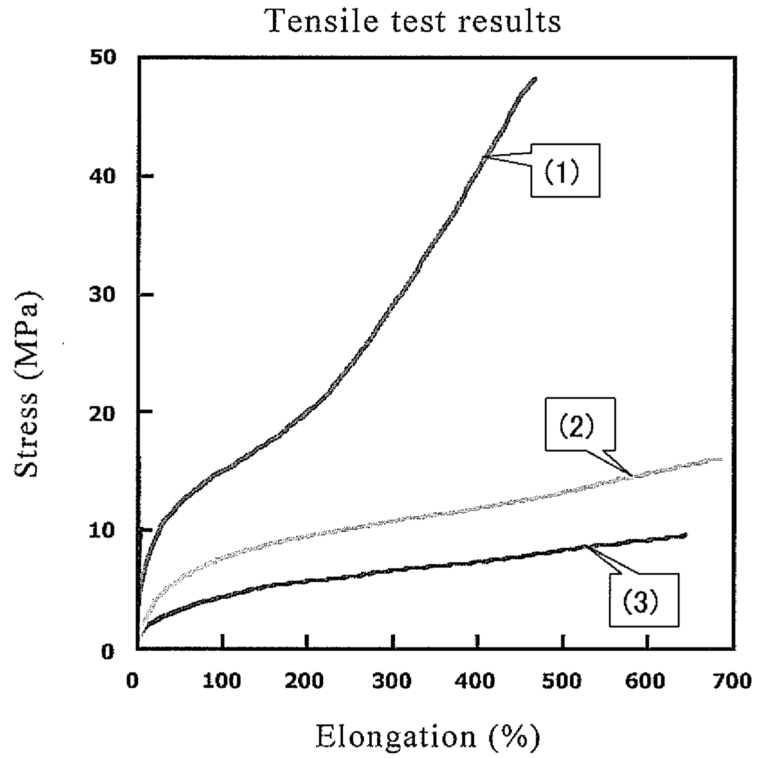
Tensile test results
Stress (MPa)
Elongation (%)
0
10
20
30
40
50
0
100
200
300
400
500
600
700
(1)
(2)
(3)

Fig. 5

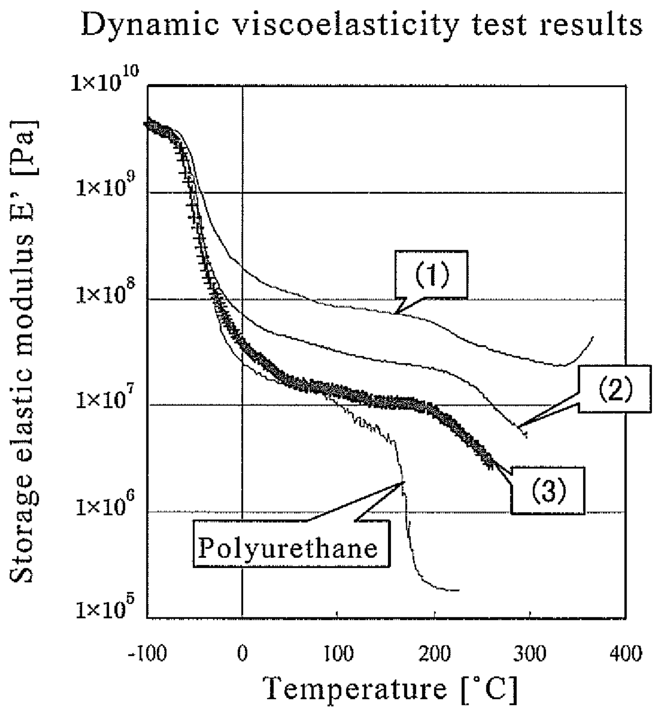
Dynamic viscoelasticity test results
Storage elastic modulus E' [Pa]
Temperature [°C]
1×10^10
1×10^9
1×10^8
1×10^7
1×10^6
1×10^5
-100
0
100
200
300
400
(1)
(2)
(3)
Polyurethane

Fig. 6

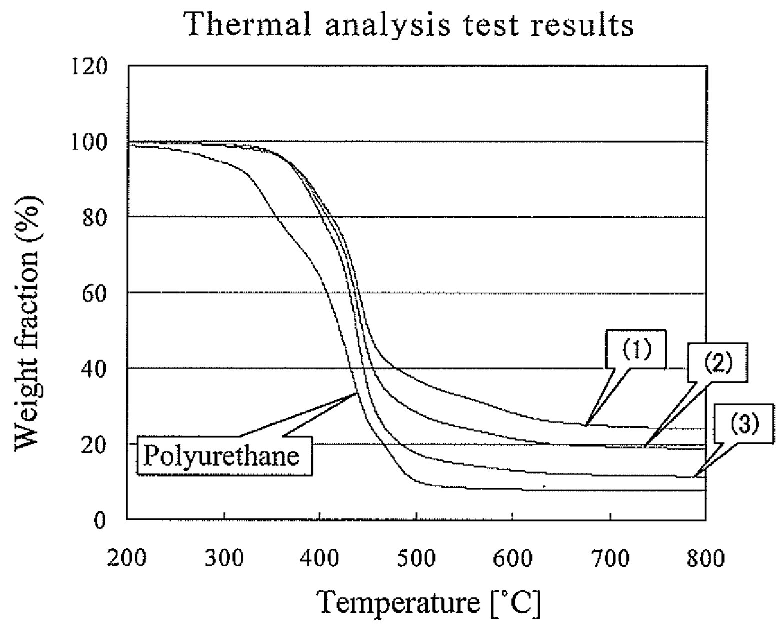
Thermal analysis test results
Weight fraction (%)
120
100
80
60
40
20
0
200
300
400
500
600
700
800
Temperature [°C]
(1)
(2)
(3)
Polyurethane

Fig. 7

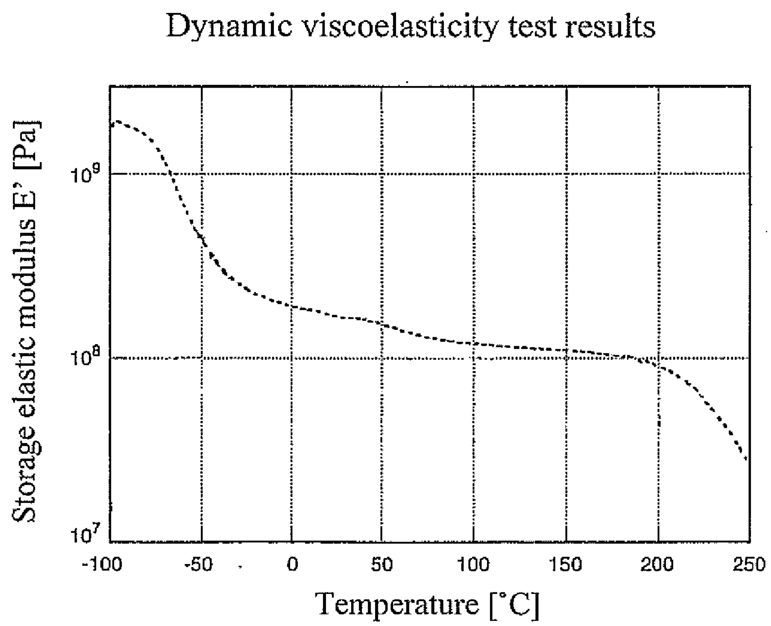
Dynamic viscoelasticity test results
Storage elastic modulus E' [Pa]
10^9
10^8
10^7
-100
-50
0
50
100
150
200
250
Temperature [°C]

**Fig. 8**

Tensile test results

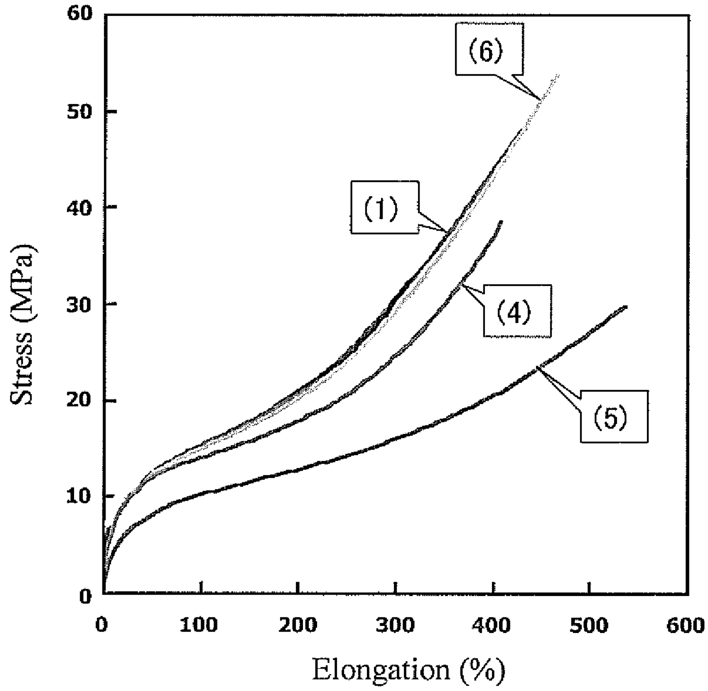


**Fig. 9**

Dynamic viscoelasticity test results

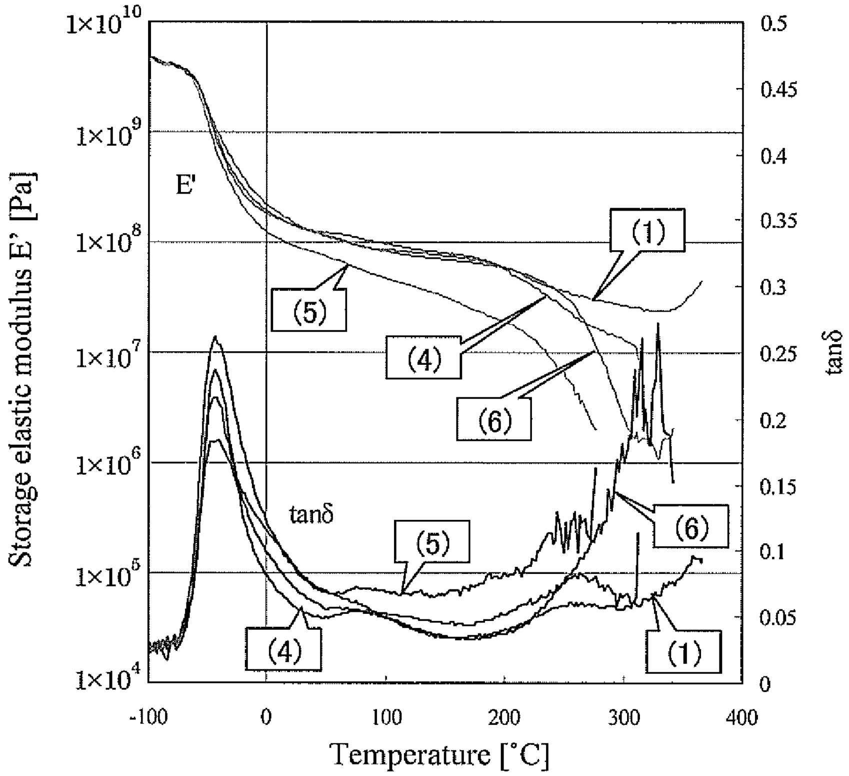

**Fig. 10**

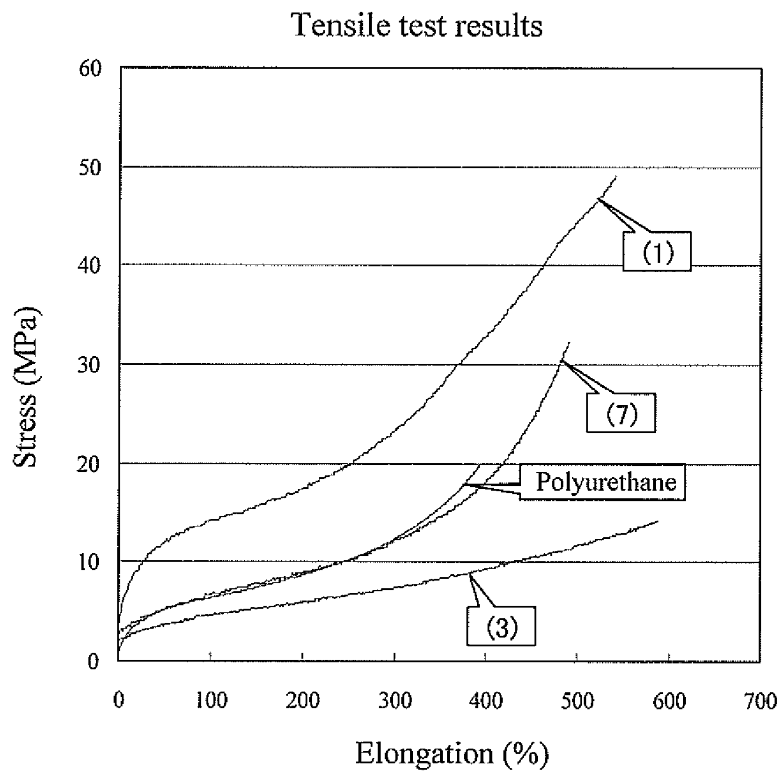
Tensile test results
Stress (MPa)
60
50
40
30
20
10
0
0
100
200
300
400
500
600
700
Elongation (%)
(1)
(7)
Polyurethane
(3)

**Fig. 11**

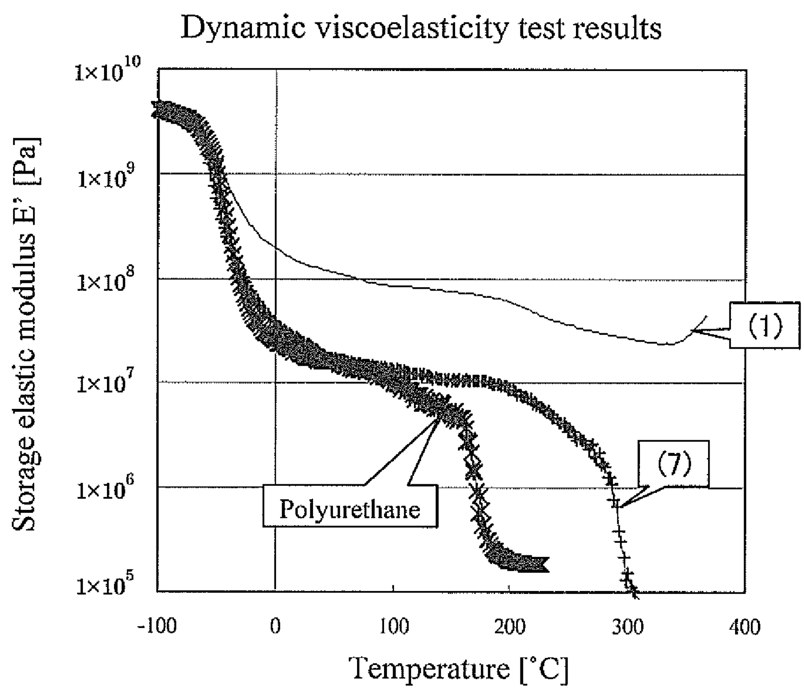
Dynamic viscoelasticity test results
Storage elastic modulus E' [Pa]
1×10^10
1×10^9
1×10^8
1×10^7
1×10^6
1×10^5
-100
0
100
200
300
400
Temperature [°C]
(1)
(7)
Polyurethane

Fig. 12

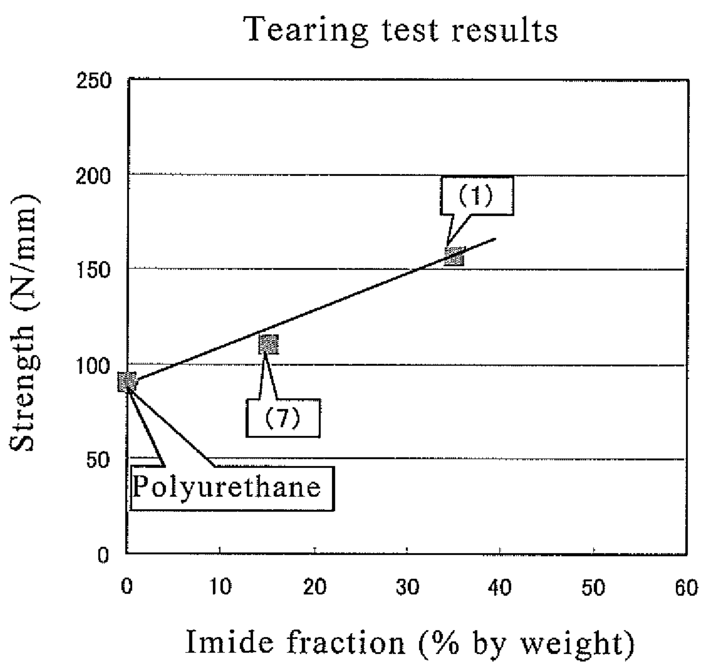
Tearing test results
Strength (N/mm)
250
200
150
100
50
0
(1)
(7)
Polyurethane
0
10
20
30
40
50
60
Imide fraction (% by weight)

Fig. 13

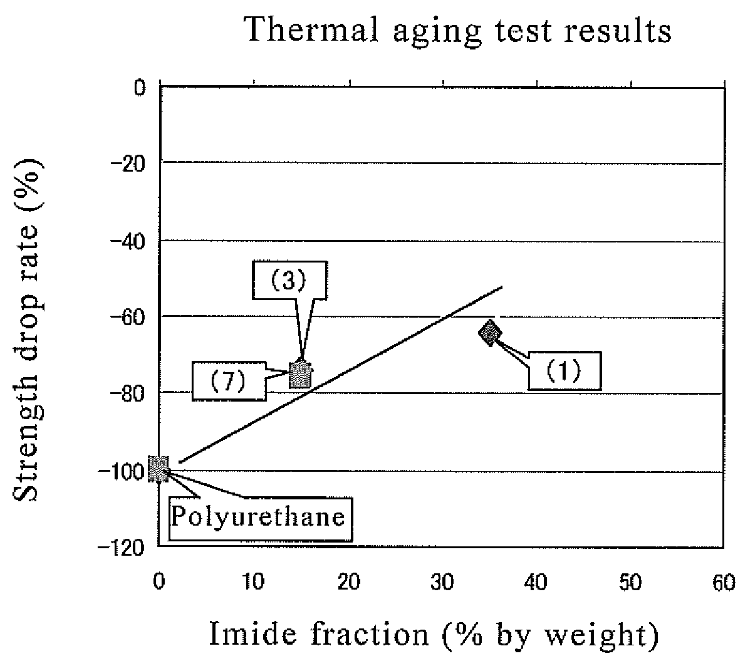
Thermal aging test results
Strength drop rate (%)
0
-20
-40
-60
-80
-100
-120
(3)
(7)
(1)
Polyurethane
0
10
20
30
40
50
60
Imide fraction (% by weight)

Fig. 14

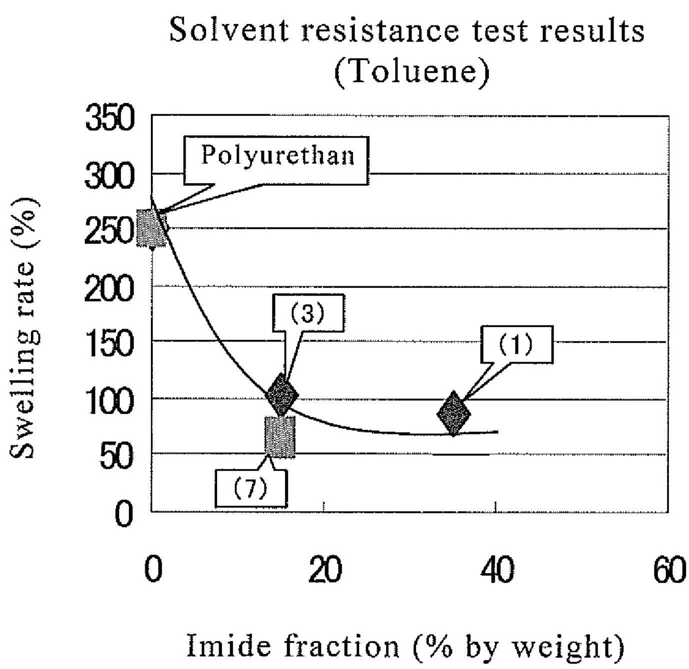
Solvent resistance test results
(Toluene)
Swelling rate (%)
350
300
250
200
150
100
50
0
Polyurethan
(3)
(1)
(7)
0
20
40
60
Imide fraction (% by weight)

Fig. 15

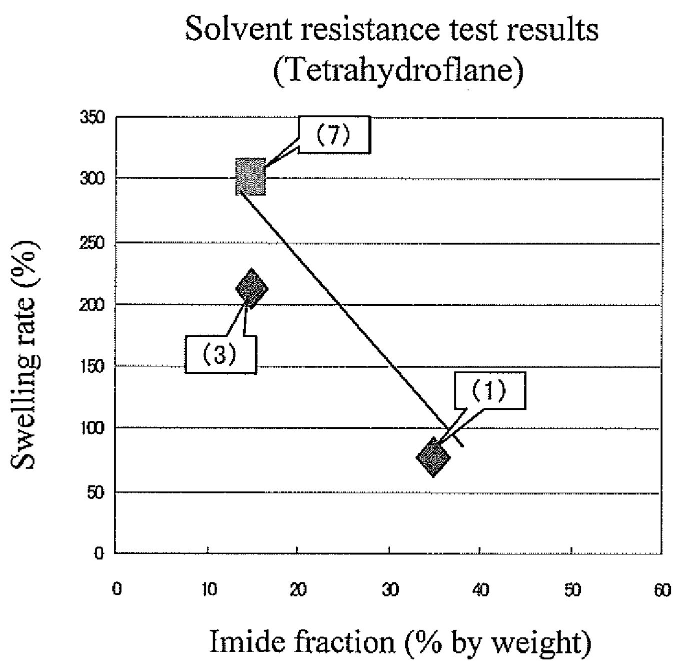
Solvent resistance test results
(Tetrahydroflane)
Swelling rate (%)
350
300
250
200
150
100
50
0
(7)
(3)
(1)
0
10
20
30
40
50
60
Imide fraction (% by weight)

Fig. 16

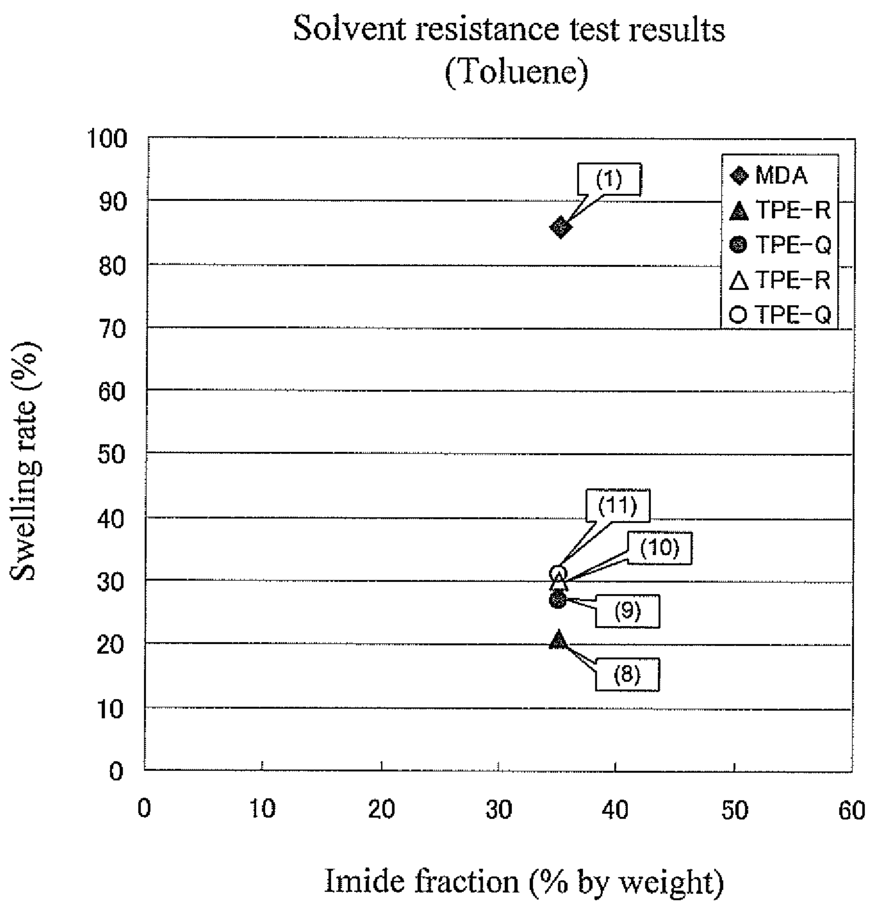
Solvent resistance test results
(Toluene)
100
90
80
70
60
50
40
30
20
10
0
0
10
20
30
40
50
60
Swelling rate (%)
Imide fraction (% by weight)
(1)
(11)
(10)
(9)
(8)
MDA
TPE-R
TPE-Q
TPE-R
TPE-Q

**INTERNATIONAL SEARCH REPORT**

International application No.
PCT/JP2007/067064

A. CLASSIFICATION OF SUBJECT MATTER
*C08G18/83*(2006.01)i, *C08G73/14*(2006.01)i

According to International Patent Classification (IPC) or to both national classification and IPC

B. FIELDS SEARCHED

Minimum documentation searched (classification system followed by classification symbols)
C08G18/00-18/87, C08G73/00-73/26

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 11-199669 A (Ajinomoto Co., Inc.),<br>27 July, 1999 (27.07.99),<br>Claims<br>& US 6335417 B1 & WO 1999/036454 A1<br>& EP 1048680 A1 | 1-12 |
| A | JP 2002-145981 A (Hitachi Chemical Co., Ltd.),<br>22 May, 2002 (22.05.02),<br>Full text<br>(Family: none) | 1-12 |
| A | JP 2006-104462 A (Ube Industries, Ltd.),<br>20 April, 2006 (20.04.06),<br>Full text<br>& WO 2006/028289 A1 | 1-12 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 31 October, 2007 (31.10.07) | 13 November, 2007 (13.11.07) |
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

International application No.
PCT/JP2007/067064

C (Continuation). DOCUMENTS CONSIDERED TO BE RELEVANT

| Category* | Citation of document, with indication, where appropriate, of the relevant passages | Relevant to claim No. |
|---|---|---|
| A | JP 2004-269895 A (Dainippon Ink And Chemicals, Inc.), 30 September, 2004 (30.09.04), Full text (Family: none) | 1-12 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 11106507 A


### Non-patent literature cited in the description


- **Hideyuki Tezeni ; Tetsuo Shiiba ; Mutsuhisa Furukawa.** Synthesis of Polyimide Urethane Elastomer and Physical Properties Thereof. *Elastomer Discussion Summary,* 1999, 72-75
- **Shoko Matsuo ; Eisuke Yamada ; Shinji Inagaki.** Synthesis of Polyimide Urethane Elastomer and Physical Properties Thereof. *Annual Meeting of Union of Chemistry-Related Societies in Chubu Area,* 1995, 381